(19) Europäisches Patentamt
European Patent Office
Office européen des brevets

(11) EP 2 742 083 B1

(12) **EUROPEAN PATENT SPECIFICATION**

(45) Date of publication and mention of the grant of the patent:
**25.04.2018 Bulletin 2018/17**

(21) Application number: **12743998.2**

(22) Date of filing: **09.08.2012**

(51) Int Cl.:
***C08G 65/40*** *(2006.01)* ***C08G 75/23*** *(2006.01)*
***B01D 69/12*** *(2006.01)* ***C09D 171/00*** *(2006.01)*

(86) International application number:
**PCT/EP2012/065626**

(87) International publication number:
**WO 2013/023997 (21.02.2013 Gazette 2013/08)**

(54) **POLYARYLENE ETHER KETONES**

POLYARYLENETHERKETONE

POLYARYLÈNE ÉTHER CÉTONES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.08.2011 US 201161523087 P**
**10.11.2011 EP 11188634**

(43) Date of publication of application:
**18.06.2014 Bulletin 2014/25**

(73) Proprietor: **Solvay Specialty Polymers USA, LLC.**
**Alpharetta, GA 30005-3914 (US)**

(72) Inventors:
- **SRIRAM, Suresh R.**
**Alpharetta, Georgia 30022 (US)**
- **HOPPIN, Charles R.**
**Alpharetta, Georgia 30022 (US)**
- **TAYLOR, Narmandakh**
**Alpharetta, Georgia 30004 (US)**
- **SRINIVASAN, Satchit**
**Alpharetta, Georgia 30005-3914 (US)**

(74) Representative: **Benvenuti, Federica et al**
**Solvay S.A.**
**Département de la Propriété Intellectuelle**
**Rue de Ransbeek, 310**
**1120 Bruxelles (BE)**

(56) References cited:
**US-B1- 6 608 167**

- **KRICHELDORF H.C. ET AL: "New Polymer Syntheses LXXXII", JOURNAL OF POLYMER SCIENCE PART A: POLYMER CHEMISTRY, vol. 33, 1995, pages 2667-2671, XP002674685,**
- **CHATT ET AL: "Poly(ether sulfone) of Isosorbide", HIGH PERFORMANCE POLYMERS, vol. 21, no. 1, 2009, pages 105-118, XP008151327,**
- **FENOUILLOT ET AL: "Polymers from renewable 1.4:3,6 -dianhydrohexitols", PROGRESS IN POLYMER SCIENCE, 2010, pages 578-622, XP002674686,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

This application claims priority to U.S. provisional application No. 61/523087 filed on August 12, 2011 and to European application No. 11188634.7 filed November 10, 2011, the whole content of each of these applications being incorporated herein by reference for all purposes.

## Technical Field

The invention pertains to novel polyarylene ether ketones derived from bio-based feed-stocks, to a process for their manufacture and to their use for the manufacture of shaped articles.

## Background Art

The development of renewable bio-based chemicals has the potential to reduce the amount of petroleum consumed in the chemical industry and also to open new high-value-added markets to agriculture; 1,4:3,6-dianhydrohexitols are examples of such chemicals. Interest in the production of 1,4:3,6-dianhydrohexitols, especially isosorbide, has been generated by potential industrial applications including the synthesis of polymers.

The use of 1,4:3,6-dianhydrohexitols in polymers, and more specifically in polycondensates, can be motivated by several features: they are rigid molecules, chiral, and non-toxic. For these reasons, there are expectations that polymers with high glass transition temperature and/or with special optical properties can be synthesized. Also the innocuous character of the molecules opens the possibility of applications in packaging or medical devices.

The industrial production of such monomers is a developing area, quickly making available this feedstock at more and more attractive prices. Moreover, interest in chemicals derived from renewable resources is increasing and becoming a decisive argument: as the carbon contained in bioplastics is not derived from fossilized biomass, but from atmospheric $CO_2$ absorbed by vegetals biomass, these plastics should alleviate the effects of climate change.

Depending on the chirality, three isomers of the 1,4:3,6-dianhydrohexitols sugar diol exist, namely isosorbide (1), isomannide (2) and isoidide (3):

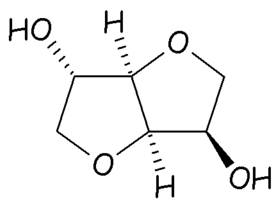
(1)
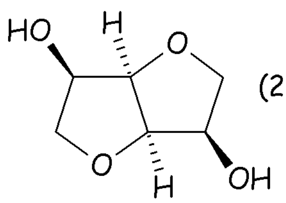
(2)
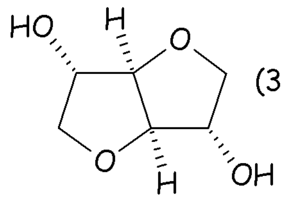
(3)

.

The 1,4:3,6-dianhydrohexitols are composed of two cis-fused tetrahydrofuran rings, nearly planar and V-shaped with a 120° angle between rings. The hydroxyl groups are situated at carbons 2 and 5 and positioned on either inside or outside the V-shaped molecule, as shown in Fig. 1. They are designated, respectively, as endo or exo. Isoidide has two exo hydroxyl groups, whereas for isomannide they are both endo, and for isosorbide there is one exo and one endo hydroxyl group. It is generally understood that the presence of the exo substituent increases the stability of the cycle to which it is attached. Also, exo and endo groups exhibit different reactivities since they are more or less accessible depending on the steric requirements of the studied reaction. The reactivity also depends on the existence of intramolecular hydrogen bonds, also shown see Fig. 1

As per the manufacture of these 1,4:3,6-dianhydrohexitols, to summarize briefly, starch extracted from biomass and in particular from corn starch, is first degraded into d-glucose (1.A) and d-mannose (2.A) by an enzymatic process. The hydrogenation of these two sugars gives d-sorbitol (1.B) and d-mannitol (2.B); sorbitol and mannitol can subsequently be dehydrated to obtain isosorbide (1) and isomannide (2), as shown herein below:

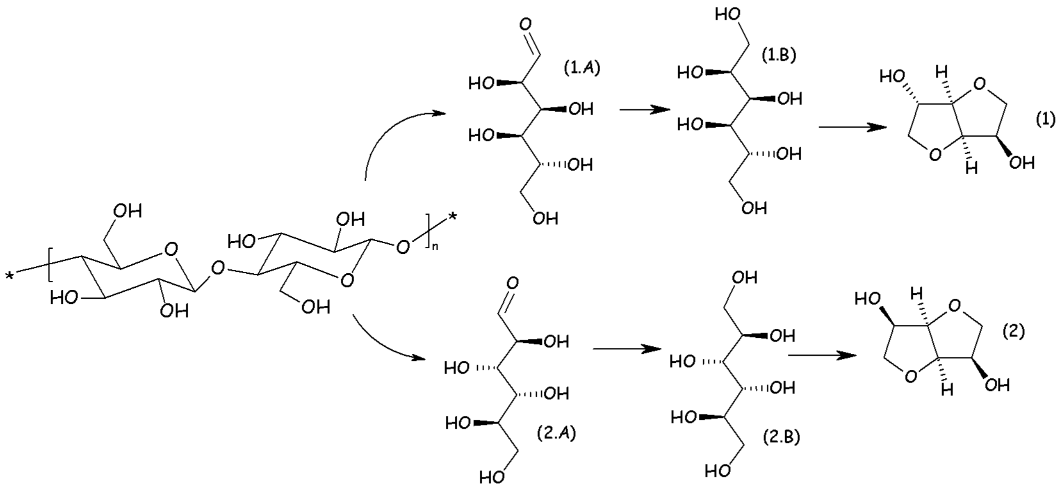

Finally, the third isomer, isoidide (3), can be produced from l-idose following a similar procedure as above sketched, but l-idose rarely exists in nature and cannot be extracted from vegetal biomass. For this reason researchers have developed different pathways to isoidide, including isomerisation of isosorbide or isomannide.

Reactivity of 1,4:3,6-dianhydrohexitols in esterification or cross-esterification reactions has been extensively exploited for incorporating such recurring units in polyesters and/or polycarbonates, including aromatic counterparts.

On the other side, reactivity in etherification reactions of 1,4:3,6-dianhydrohexitols has been often reported as more difficult. Also, no indication has been provided in the art on how incorporating 1,4:3,6-dianhydrohexitols in an aromatic polyetherketone polymer structure.

Pursuing a similar approach, US 6608167 (DUPONT DE NEMOURS AND COMPANY) 19.08.2003 discloses manufacture and reactivity of certain derivative of isosorbide, precisely bis(2-hydroxyethyl)isosorbide; in particular, this reference teaches that said derivative same can be used as valuable monomers for a wide variety of polymeric materials; possible incorporation of this monomer in polyether ketones, polyether ether sulphones and the like by known methods.

The presence of the aliphatic and flexible $C_2$ spacer, however, while enabling substantial enhancement of the hydroxyl group reactivity in a variety of reactions, thanks to the increased accessibility of the same, might substantially impair capability of providing a rigid polymer structure having high thermal stability and glass transition temperature ($T_g$) useful in applications that experience more aggressive environments.

On the other side, certain documents, pertaining to the technical field of polyarylene ether ketone (PAEK) polymers, disclose the modification of PAEK by means of bio-compatible materials. Thus, WO 02/00763 and WO 02/00271 pertain to the functionalization of the PAEK polymer, either via the -C(O)- unit (see '763) or via the phenyl moieties (see '271), aiming at incorporation bio-compatible moieties. Neither document mentions isosorbide as useful raw material for such bio-compatible functionalization. Poly (aryl ether sulphones) containing isosorbide, isomannide and isoidide units are disclosed in Chatti et al, High Performance Polymers, 2009,21,p105-118.

In view of all the above, there is still a current shortfall in the art for polyarylene ether ketones (PAEK) comprising recurring units derived from bio-compatible and bio-based raw materials, which: (1) are readily accessible through sustainable synthetic routes; (2) retain valued properties of PAEK such as excellent thermal stability, high stiffness and strength, good toughness and good chemical resistance; and (3) can potentially provide improved performance relative to current commercial PAEK grades for applications requiring increased hydrophilicity as well as improved bio-compatibility and bio-degradability.

## Brief description of drawings

Figure 1 depicts the three isomers of the 1,4:3,6-dianhydrohexitols sugar diol, namely isosorbide (1), isomannide (2) and isoidide (3).

Figure 2 is the $^1$H-NMR spectrum recorded on a b-PAEK polymer made from polycondensation reaction between 4,4'-difluorobenzophenone and isosorbide.

## Summary of invention

The Applicant has now found that it is possible to advantageously manufacture polyarylene ether ketones

(PAEK) of high molecular weight comprising moieties derived from incorporation of 1,4:3,6-dianhydrohexitols, said PAEK polymers advantageously fulfilling the above mentioned needs, including high $T_g$, thermal stability, and increased hydrophilicity.

It is thus an object of the present invention, a polyarylene ether ketone [polymer (b-PAEK)] comprising recurring units of formula ($R_b$):

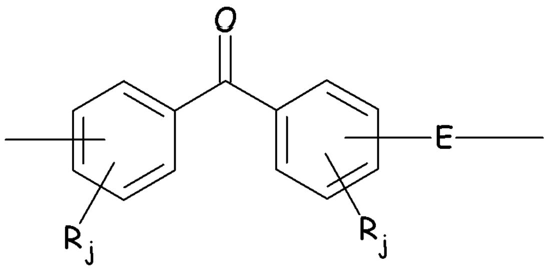

(formula $R_b$)

wherein:

- E is selected from the group consisting of:

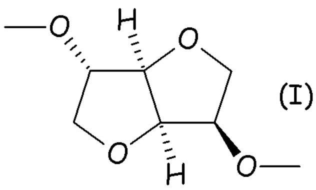

(I)

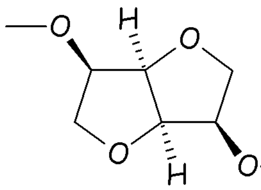

(II)

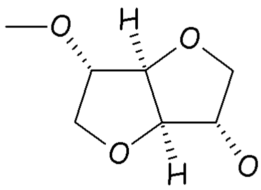

(III)

- each of R, equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j is zero or is an integer from 1 to 4,

said polymer (b-PAEK) having a weight average molecular weight of at least 10 000.

The high molecular weight polymer (b-PAEK) of the present invention advantageously possesses a unique combination of properties, both deriving from the incorporation of bio-based moieties from 1,4:3,6-dianhydrohexitols, like, notably, high Tg, stiffness, biocompatibility, hydrophilicity and from the high molecular weight aryl ketone moieties, ensuring thermal stability, high stiffness and strength, and good toughness.

In recurring unit ($R_b$), the respective phenylene moieties may independently have 1,2-, 1,4- or 1,3 -linkages to the other moieties different from R in the recurring unit. Preferably, said phenylene moieties have 1,3- or 1,4- linkages, more preferably they have 1,4-linkage.

Still, in recurring units ($R_b$), j is at each occurrence zero, that is to say that the phenylene moieties have no other substituents than those enabling linkage in the main chain of the polymer.

Most preferably, recurring units ($R_b$) are selected from the group consisting of:

units of formula ($R_b$-I):

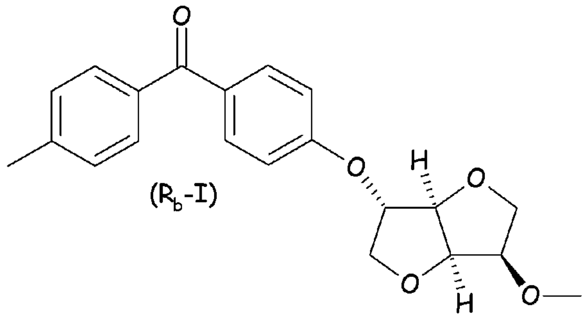

($R_b$-I)

units of formula ($R_b$-2):

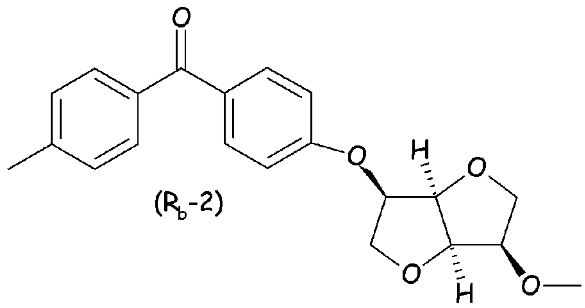

($R_b$-2)

units of formula ($R_b$-3):

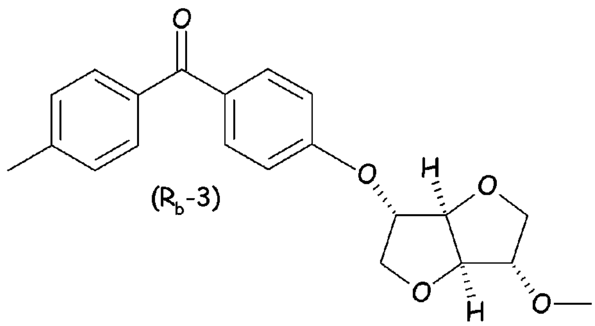

($R_b$-3)

The above recurring units of preferred embodiments ($R_b$-I), ($R_b$-2), ($R_b$-3) can be each present alone or in admixture. Preferred are polymer (b-PAEK) comprising recurring units ($R_b$) of formula ($R_b$-I), optionally in combination with recurring units of formula ($R_b$-2) and ($R_b$-3).

The polymer (b-PAEK) may comprise in addition to recurring units of formula ($R_b$) as above detailed, recurring units different from $R_b$: in other words, in addition to units derived from polycondensation of the dihaloketocompound of formula:

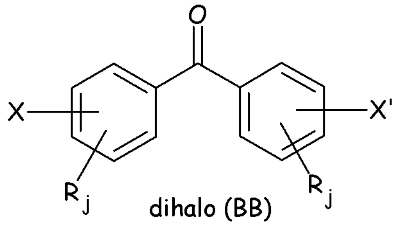

dihalo (BB)

wherein X and X', equal to or different from each other, are halogens, and
R and j have the meaning as above detailed, and of a 1,4:3,6-dianhydrohexitols, the polymer (b-PAEK) may notably comprise recurring units derived from the polycondensation of one or more diols different from the 1,4:3,6-dianhydrohexitols and/or from the polycondensation of one or more dihaloaryl compound different from above mentioned dihaloketocompound of formula dihalo (BB).

According to certain embodiments, the polymer (b-PAEK) can thus comprise, in addition to recurring units ($R_b$), as above detailed, recurring units ($R_a$) comprising a Ar-C(O)-Ar' group, with Ar and Ar', equal to or different from each other, being aromatic groups, said recurring units ($R_a$) being generally selected from the group consisting of formulae (J-A) to (J-O), herein below:

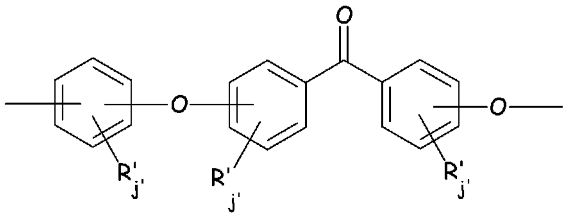

(J-A)

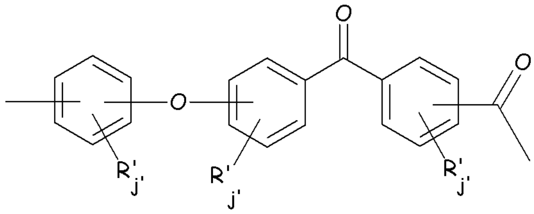

(J-B)

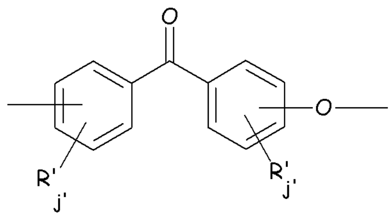

(J-C)

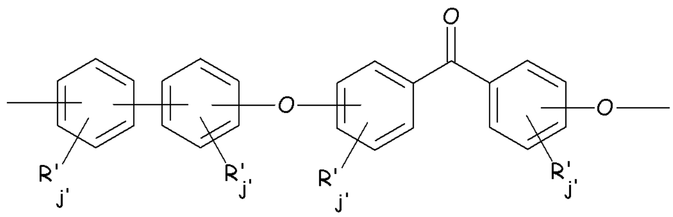

(J-D)

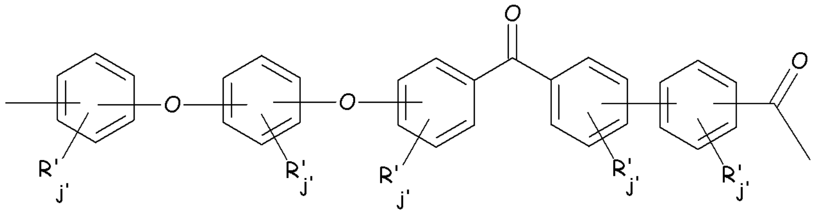

(J-E)

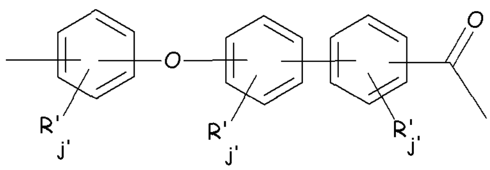

(J-F)

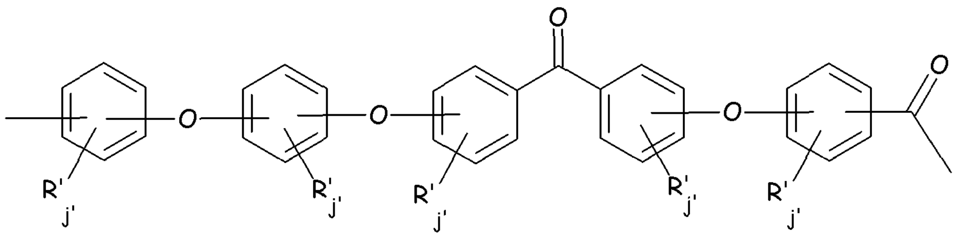

(J-G)

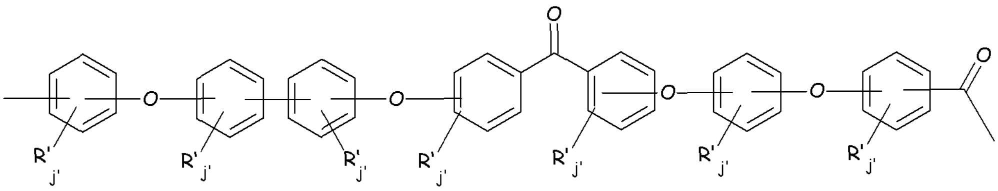

(J-H)

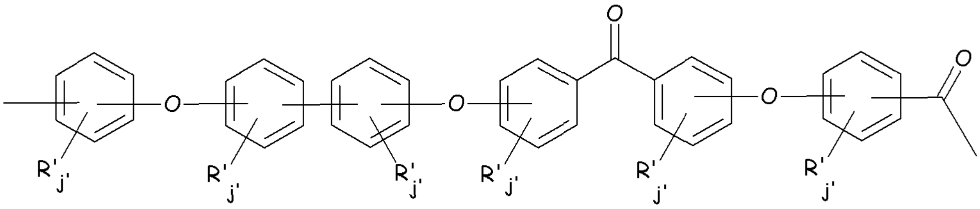

(J-I)

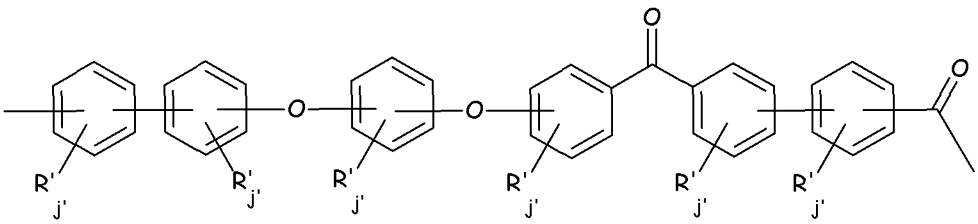

(J-J)

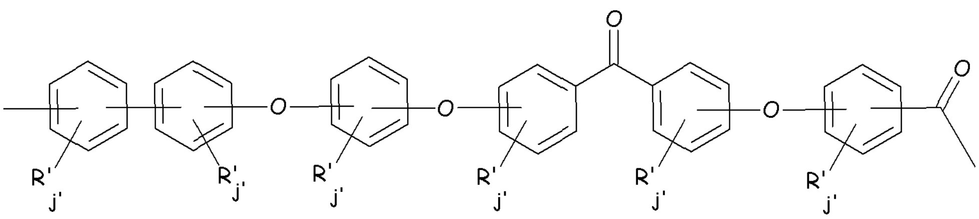

(J-K)

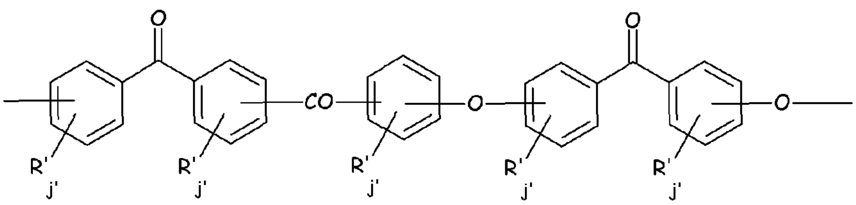

(J-L)

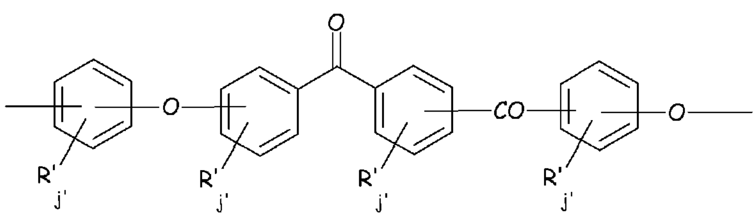

(J-M)

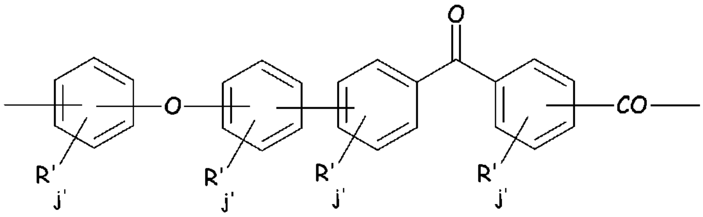

(J-N)

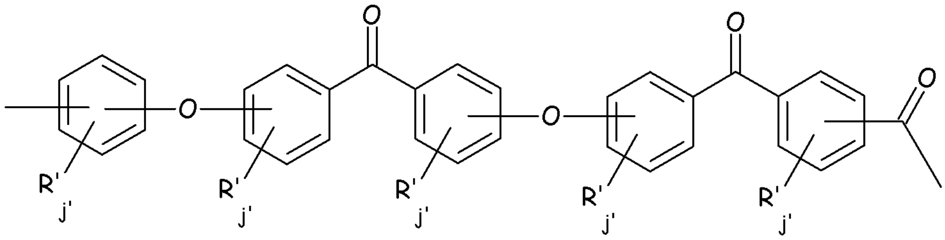

(J-O)

wherein:

- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j' is zero or is an integer from 0 to 4.

In recurring unit ($R_a$), the respective phenylene moieties may independently have 1,2-, 1,4- or 1,3 -linkages to the other moieties different from R' in the recurring unit. Preferably, said phenylene moieties have 1,3- or 1,4- linkages, more preferably they have 1,4-linkage.

Still, in recurring units ($R_a$), j' is at each occurrence zero, that is to say that the phenylene moieties have no other substituents than those enabling linkage in the main chain of the polymer.

Preferred recurring units ($R_a$) are thus selected from those of formulae (J'-A) to (J'-O) herein below:

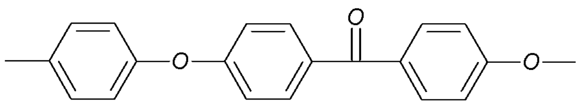

(J'-A)

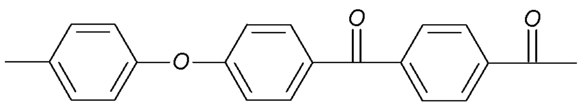

(J'-B)

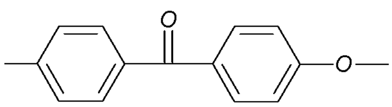

(J'-C)

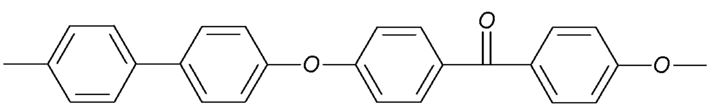

(J'-D)

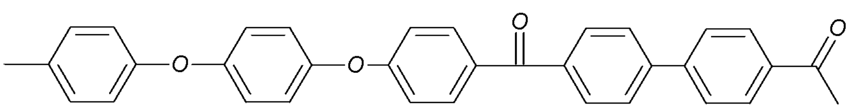

(J'-E)

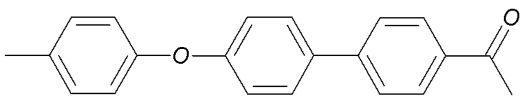
(J'-F)

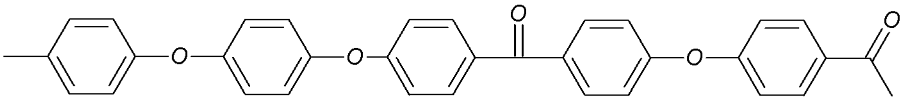
(J'-G)

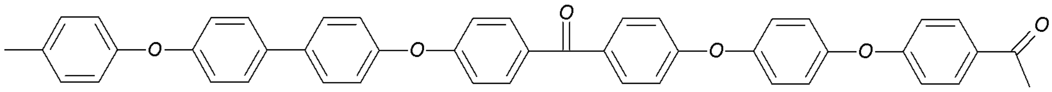
(J'-H)

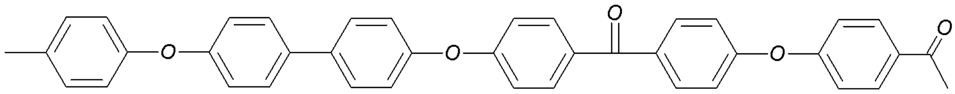
(J'-I)

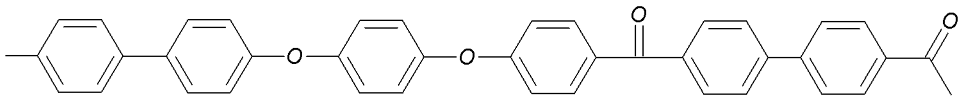
(J'-J)

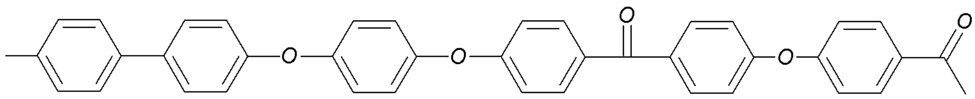
(J'-K)

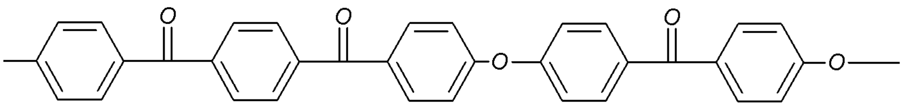
(J'-L)

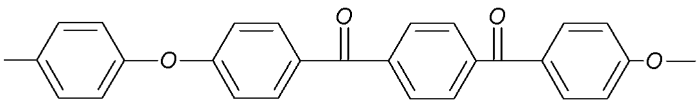
(J'-M)

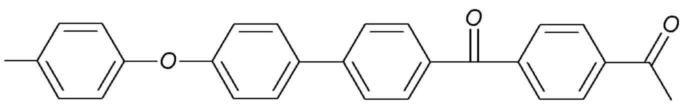
(J'-N)

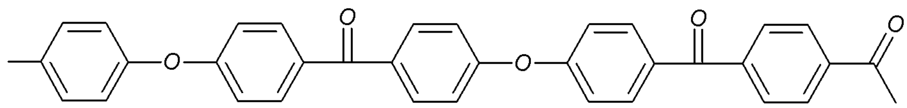
(J'-O)

According to certain embodiments, the polymer (b-PAEK) can comprise, in addition to recurring units ($R_b$), as above detailed, recurring units ($R_c$) comprising a Ar-$SO_2$-Ar' group, with Ar and Ar', equal to or different from each other, being aromatic groups, said recurring units ($R_c$) generally complying with either of formulae:

(S1): $-Ar^1-(T'-Ar^2)_n-O-Ar^3-SO_2-[Ar^4-(T-Ar^2)_n-SO_2]_m-Ar^5-O-$

(S2): $-E'-O-Ar^3-SO_2-(Ar^4-SO_2)_m-Ar^5-O-$

wherein:

- $Ar^1$, $Ar^2$, $Ar^3$, $Ar^4$, and $Ar^5$, equal to or different from each other and at each occurrence, are independently a aromatic mono- or polynuclear group;
- T and T', equal to or different from each other and at each occurrence, is independently a bond or a divalent group optionally comprising one or more than one heteroatom; preferably T' is selected from the group consisting of a bond, $-CH_2-$, -C(O)-, $-C(CH_3)_2-$, $-C(CF_3)_2-$, $-C(=CCl_2)-$, $-C(CH_3)(CH_2CH_2COOH)-$, $-SO_2-$, and a group of formula:

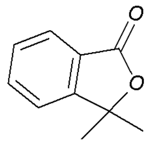

,

and preferably T is selected from the group consisting of a bond, $-CH_2-$, -C(O)-, $-C(CH_3)_2-$, $-C(CF_3)_2-$, $-C(=CCl_2)-$, $-C(CH_3)(CH_2CH_2COOH)-$, and a group of formula:

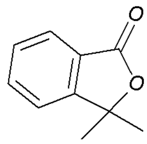

,

and
- n and m, equal to or different from each other, are independently zero or an integer of 1 to 5;
- E' is a group selected from the group consisting of formulae (E'-I), (E'-II) and (E'-III):

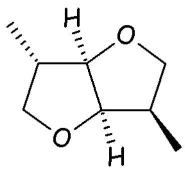 (E'-I) 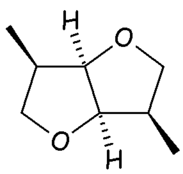 (E'-II) 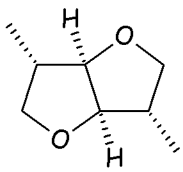 (E'-III) .

Recurring units ($R_c$) can be notably selected from the group consisting of those of formulae (S-A) to (S-F) herein below:

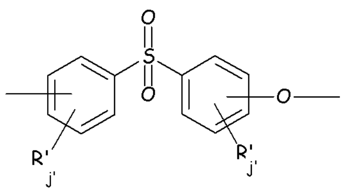 (S-A)

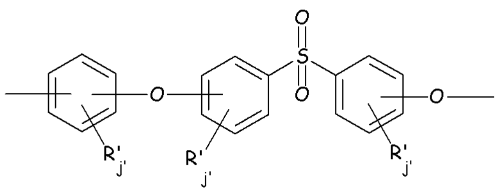 (S-B)

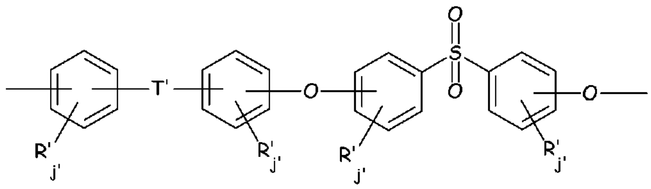

(S-C)

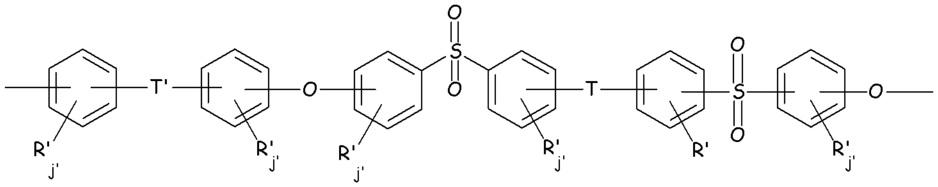

(S-D)

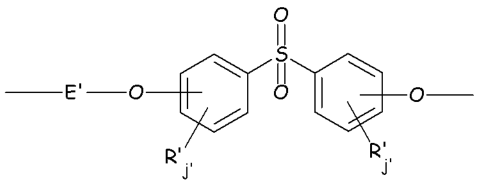

(S-E)

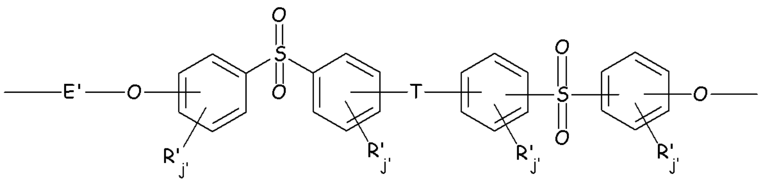

(S-F)

wherein:

- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j' is zero or is an integer from 0 to 4;
- T and T', equal to or different from each other are a bond or a divalent group optionally comprising one or more than one heteroatom; preferably T' is selected from the group consisting of a bond, $-CH_2-$, $-C(O)-$, $-C(CH_3)_2-$, $-C(CF_3)_2-$, $-C(=CCl_2)-$, $-C(CH_3)(CH_2CH_2COOH)-$, $-SO_2-$, and a group of formula:

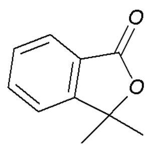

,

and preferably T is selected from the group consisting of a bond, $-CH_2-$, $-C(O)-$, $-C(CH_3)_2-$, $-C(CF_3)_2-$, $-C(=CCl_2)-$, $-C(CH_3)(CH_2CH_2COOH)-$, and a group of formula:

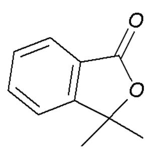

,

and

- E' is a group selected from the group consisting of formulae (E'-I), (E'-II) and (E'-III):

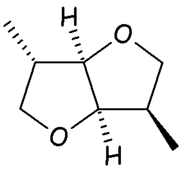 (E'-I) 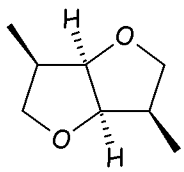 (E'-II) 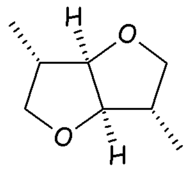 (E'-III) .

The polymer (b-PAEK) comprises recurring units of formula $R_b$ as above detailed in an amount of at least 10 % moles, preferably 15 % moles, more preferably 20 % moles, even more preferably at least 50 % moles, with respect to all recurring units of polymer (b-PAEK).

According to certain preferred embodiments, more than 70, and more preferably more than 85 % moles of the recurring units of the polymer (b-PAEK) are recurring units ($R_b$), as above detailed, the complement to 100 % moles being generally recurring units ($R_a$), as above detailed, and/or recurring units ($R_c$), as above detailed.

Still more preferably, essentially all the recurring units of the polymer (b-PAEK) are recurring units ($R_b$). Most preferably, all the recurring units of the polymer ($_b$-PAEK) are recurring units ($R_b$). Excellent results were obtained when the polymer (b-PAEK) was a polymer of which all the recurring units are recurring units ($R_b$), as above detailed.

As said, the polymer (b-PAEK) of the invention is a high molecular weight polymer, that is to say a polymer having a weight averaged molecular weight of at least 10 000, preferably at least 12 000.

This high molecular weight of polymer (b-PAEK) enables attainment of mechanical and physical properties similar to commercially available polyarylene ether ketones, including excellent thermal stability, high stiffness and strength, and good toughness. Polymers comprising recurring units ($R_b$), as above mentioned, but having molecular weight of less than 10 000, have no adequate molecular properties, and are thus of little if no utility as replacement of PAEK materials not made from bio-based feed-stocks.

To the aim of providing polymers particularly suitable for being used for manufacturing membranes, in particular filtration membranes, the polymer (b-PAEK) of the invention has advantageously a weight averaged molecular weight of at least 25 000, preferably of at least 45 000. Polymers (b-PAEK) having such molecular weight have been found to provide particularly good results when used as membranes for bio-processing and medical filtration, food and beverage processing, hemodialysis and water treatment.

The weight average molecular weight ($M_w$) and the number average molecular weight ($M_n$) can be estimated by gel-permeation chromatography (GPC) calibrated with polystyrene standards.

The weight average molecular weight ($M_w$) is:

$$M_w = \frac{\sum M_i^2 \cdot N_i}{\sum M_i \cdot N_i} \cdot$$

The number average molecular weight ($M_n$) :

$$M_n = \frac{\sum M_i \cdot N_i}{\sum N_i},$$

and the polydispersity index (PDI) is hereby expressed as the ratio of weight average molecular weight ($M_w$) to number average molecular weight ($M_n$).

The polymer (b-PAEK) of the present invention generally has a polydispersity index of less than 2.5, preferably of less than 2.4, more preferably of less than 2.2. This relatively narrow molecular weight distribution is representative of an ensemble of molecular chains with similar molecular weights and substantially free from oligomeric fractions, which might have a detrimental effect on polymer properties.

In other words, the Applicant has succeeded in providing a polymer (b-PAEK) wherein the moieties of 1,4:3,6-dianhydrohexitols have been successfully incorporated in the chain with no detrimental effect in polymerization reactivity, so that an excellent material, with fully controlled structure is advantageously obtained.

These results enable achievement of polymers (b-PAEK) advantageously having extremely low levels of insolubles and extractibles, but still possessing increased bio-compatibility due to the 1,4:3,6-dianhydrohexitols units, which have been found to be particularly useful for manufacturing membranes, in particularly those intended for contact with body fluids and/or food and beverages.

The polymer (b-PAEK) of the present invention advantageously possesses a glass transition temperature of

at least 140°C, preferably 160°C, more preferably at least 165°C. Such high glass transition temperatures are advantageous for extending temperatures range of use of the polymer (PAEK-b).

Glass transition temperature (Tg) is generally determined by DSC, according to ASTM D3418.

The polymer (b-PAEK) of the present invention advantageously possesses a peak degradation temperature of at least 300°C, preferably at least 350°C, more preferably at least 400°C.

Peak degradation temperature is generally determined by TGA, using procedure described in ASTM E1131.

Still another object of the present invention is a process for manufacturing the polymer (b-PAEK) as above detailed.

The process of the invention advantageously comprises reacting in a solvent mixture comprising a polar aprotic solvent:

- at least one 1,4:3,6-dianhydrohexitol [diol (AA)] selected from the group consisting of isosorbide (1), isomannide (2) and isoidide (3):

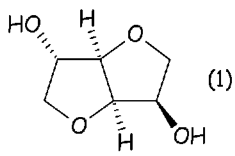
(1)
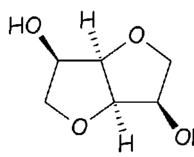
(2)
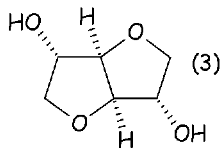
(3)

- at least one dihalobenzoid compound [dihalo (BB)] of formula:

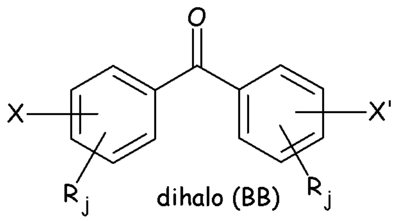
dihalo (BB)

wherein:

- each of R, equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j is zero or is an integer from 1 to 4;
- X and X', equal to or different from each other, are independently a halogen atom, preferably Cl or F, more preferably F;

said diol (AA) and dihalo (BB) being reacted in substantially equimolecular amount, in the presence of an alkali metal carbonate.

Unequal reactivity of hydroxyl groups of 1,4:3,6-dianhydrohexitol may be used to generate in a first reaction step of the process of the invention a bio-hydroxyl-halo compound (AB); typical examples of these bio-hydroxyl-halo compounds (AB) are those obtained by partial reaction of the isosorbide and/or the isoidide, typically having formulae:

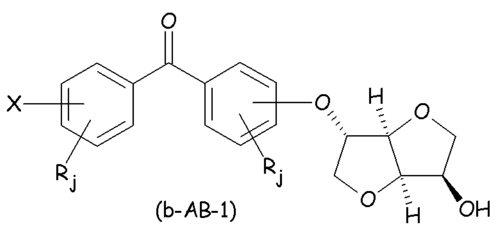
(b-AB-1)
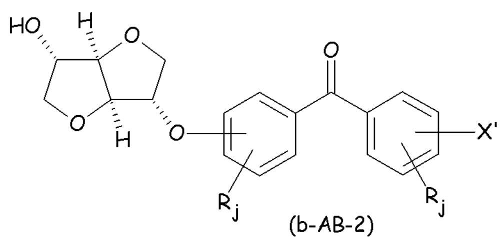
(b-AB-2)

wherein:

- each of R, equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j is zero or is an integer from 1 to 4;
- X and X', equal to or different from each other, are independently a halogen atom, preferably Cl or F, more preferably F.

The process may comprise additionally reacting in said solvent mixture at least one of:

- dihydroxyl compound [diol (A'A')] different from diol (AA), as above detailed;
- dihaloaryl compound [dihalo (B'B')] different from dihalo (BB), as above detailed; and
- a hydroxyl-halo compound [hydro-halo (A'B')],

when the process is intended to manufacture polymer (b-PAEK) comprising recurring units different from ($R_b$), being understood that the overall amount of halo-groups and hydroxyl-groups is then substantially equimolecular.

The expression 'substantially equimolecular' used with reference to the ratio between diol (AA) and dihalo (BB) and/or with reference to any other combination of optional bio-hydroxyl-halo (AB), diol (A'A'), dihalo (B'B') and hydroxyl-halo (A'B') compounds, as above detailed, is to be understood that the molar ratio between the overall amount of hydroxyl groups and overall amount of halo groups is of 0.95 to 1.05, preferably of 0.99 to 1.01, more preferably of 0.995 to 1.005.

Preferred dihalobenzoid compounds [dihalo (BB)] are 4,4'-difluorobenzophenone, 4,4'-dichlorobenzophenone and 4-chloro-4'-fluorobenzophenone, with 4,4'-difluorobenzophenone being particularly preferred.

Among dihaloaryl compounds [dihalo(B'B')] different from dihalo (BB) mention can be notably made of compounds of formula (S):

$$X\text{-}Ar^3\text{-}SO_2\text{-}[Ar^4\text{-}(T\text{-}Ar^2)_n\text{-}SO_2]_m\text{-}Ar^5\text{-}X \qquad \text{formula (S)}$$

wherein:

- n and m, equal to or different from each other, are independently zero or an integer of 1 to 5;
- X is an halogen selected from F, Cl, Br, I ;
- each of $Ar^2$, $Ar^3$, $Ar^4$, $Ar^5$ equal to or different from each other and at each occurrence, is an aromatic moiety of the formula :

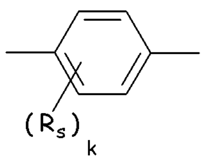
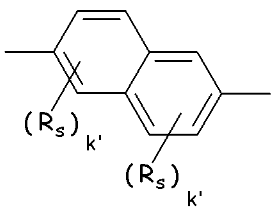
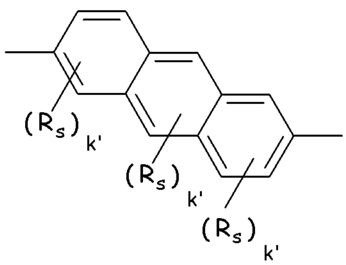

wherein:

- each $R_s$ is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- k is zero or an integer of 1 to 4; k' is zero or an integer of 1 to 3;
- T is a bond or a divalent group optionally comprising one or more than one heteroatom; preferably T is selected from the group consisting of a bond, $-CH_2-$, $-C(O)-$, $-C(CH_3)_2-$, $-C(CF_3)_2-$, $-C(=CCl_2)-$, $-C(CH_3)(CH_2CH_2COOH)-$, and a group of formula:

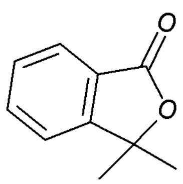
.

Among dihaloaryl compounds [dihalo(B'B')] different from dihalo (BB) suitable for being used in the process of the present invention, mention may notably made of the following molecules :

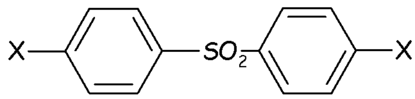

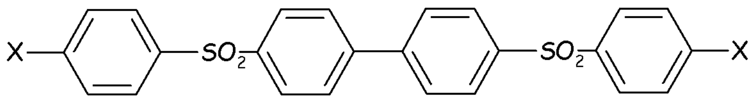

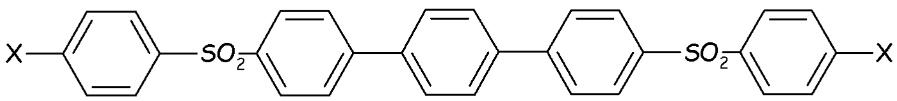

Among dihydroxyl compounds [diols (A'A')] different from diol (AA), as above detailed, mention can be of compounds of formula (O):

$HO\text{-}Ar^1\text{-}(T'\text{-}Ar^2)_n\text{-}OH$ formula (O)

wherein:

- n is zero or an integer of 1 to 5;
- each of $Ar^1$ and $Ar^2$, equal to or different from each other and at each occurrence, is an aromatic moiety of the formula :

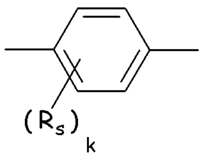 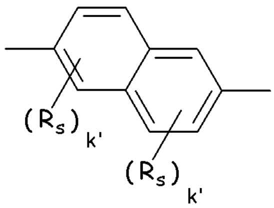 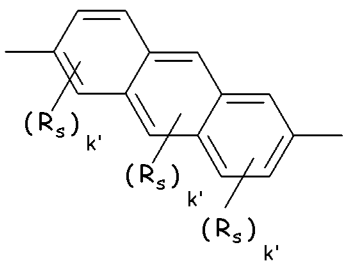

wherein:

- each $R_s$ is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- k is zero or an integer of 1 to 4; k' is zero or an integer of 1 to 3;
- T' is a bond or a divalent group optionally comprising one or more than one heteroatom; preferably T is selected from the group consisting of a bond, $-SO_2-$, $-CH_2-$, $-C(O)-$, $-C(CH_3)_2-$, $-C(CF_3)_2-$, $-C(=CCl_2)-$, $-C(CH_3)(CH_2CH_2COOH)-$, and a group of formula:

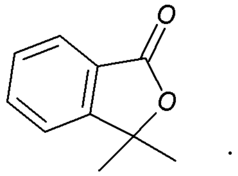

.

Among preferred dihydroxyl compounds [diols (A'A')] different from diol (AA), as above detailed, suitable for being used in the process of the present invention, mention may be notably made of the following molecules:

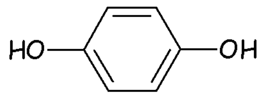

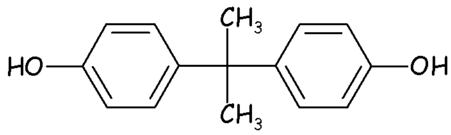

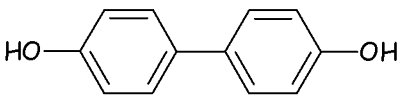

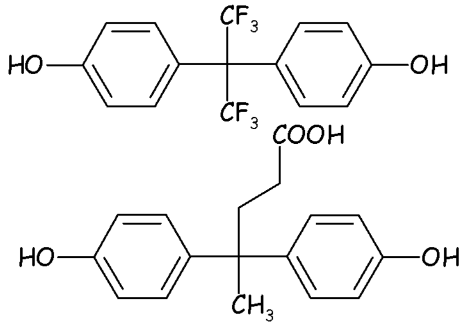

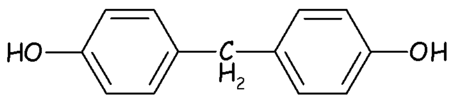

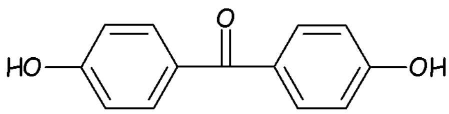

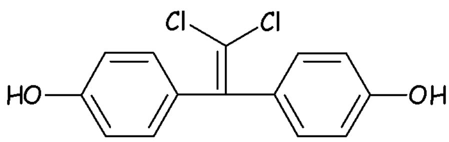

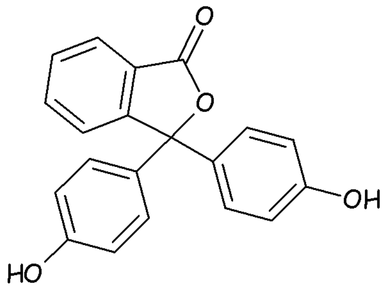

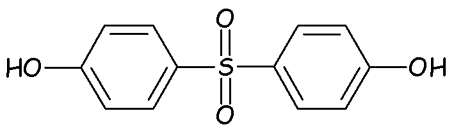

Among hydroxyl-halo compound [hydro-halo (A'B')] different from bio-hydroxyl-halo compound (AB), as above detailed, mention can be of compounds of any of formulae:

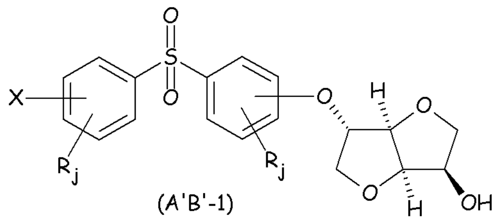

(A'B'-1)

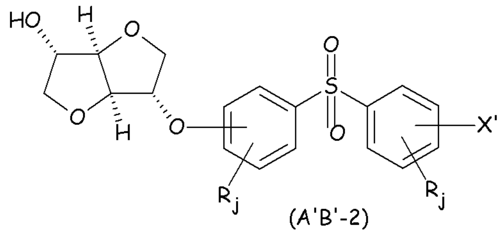

(A'B'-2)

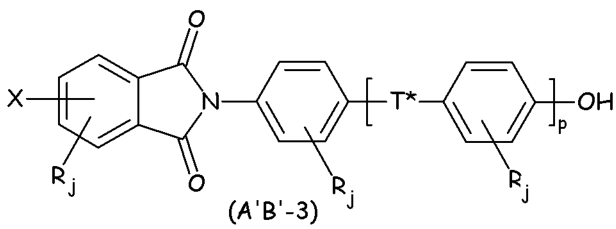

(A'B'-3)

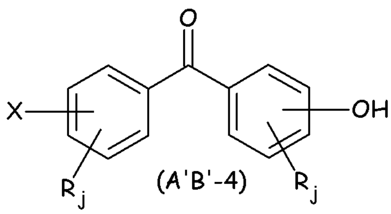

(A'B'-4)

- each of R, equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- T*, equal to or different from each other at each occurrence, is independently a bond or a divalent group optionally comprising one or more than one heteroatom; preferably T* is selected from the group consisting of a bond, $-SO_2-$, $-CH_2-$, $-C(O)-$, $-C(CH_3)_2-$, $-C(CF_3)_2-$, $-C(=CCl_2)-$, $-C(CH_3)(CH_2CH_2COOH)-$;
- j is zero or is an integer from 1 to 4;
- X and X', equal to or different from each other, are independently a halogen atom, preferably Cl or F, more preferably F.

The alkali metal carbonate is preferably sodium carbonate, potassium carbonate, rubidium carbonate and cesium carbonate. Sodium carbonate and especially potassium carbonate are preferred. Mixtures of more than one carbonates can be used, for example, a mixture of sodium carbonate or bicarbonate and a second alkali metal carbonate or bicarbonate having a higher atomic number than that of sodium.

The amount of said alkali metal carbonate used, when expressed by the ratio of the equivalents of alkali metal (M) per equivalent of hydroxyl group (OH) [eq. (M)/eq. (OH)] ranges from about 1.0 to about 3.0, preferably from about 1.1 to about 2.5, and more preferably from about 1.5 to about 2.0, being understood that above mentioned hydroxyl group equivalents are comprehensive of those of the diol (AA), and, if present, of bio-hydroxyl-halo compound (AB), of diol (A'A') and of hydro-halo (A'B').

The use of an alkali metal carbonate having an average particle size of less than about 100 μm, preferably of less than about 50 μm is particularly advantageous. The use of an alkali metal carbonate having such a particle size permits the synthesis of the polymers to be carried out at a relatively lower reaction temperature with faster reaction.

The diol (AA) and dihalo (BB) and all other optional components are dissolved or dispersed in a solvent mixture comprising a polar aprotic solvent. If desired, an additional solvent can be used together with the polar aprotic solvent which forms an azeotrope with water, whereby water formed as a by-product during the polymerization may be removed by continuous azeotropic distillation throughout the polymerization.

The by-product water and carbon dioxide possibly formed during the polymerization can alternatively be removed using a controlled stream of an inter gas such as nitrogen or argon over the reaction mixture in addition to or in the absence of an azeotrope-forming solvent as described above.

For the purpose of the present invention, the term "additional solvent" is understood to denote a solvent different from the polar aprotic solvent and the reactants and the products of said reaction.

As polar aprotic solvents, sulphur containing solvents known and generically described in the art as dialkyl sulfoxides and dialkylsulfones wherein the alkyl groups may contain from 1 to 8 carbon atoms, including cyclic alkyliden analogs thereof, can be mentioned. Specifically, among the sulphur-containing solvents that may be suitable for the purposes of this invention are dimethylsulfoxide, dimethylsulfone, diphenylsulfone, diethylsulfoxide, diethylsulfone, diisopropylsulfone, tetrahydrothiophene-1, 1-dioxide (commonly called tetramethylene sulfone or sulfolane) and tetrahydrothiophene-1-monoxide and mixtures thereof. Nitrogen-containing polar aprotic solvents, including dimethylacetamide, dimethylformamide and N-methyl pyrrolidone (i.e., NMP) and the like have been disclosed in the art for use in these processes, and may also be found useful in the practice of this invention.

The additional solvent that forms an azeotrope with water will generally be selected to be inert with respect to the monomer components and polar aprotic solvent. Suitable azeotrope-forming solvents for use in such polymerization processes include aromatic hydrocarbons such as benzene, toluene, xylene, ethylbenzene, chlorobenzene and the like.

The azeotrope-forming solvent and polar aprotic solvent are typically employed in a weight ratio of from about 1 : 10 to about 1 : 1, preferably from about 1 : 5 to about 1 : 3.

Generally, after an initial heat up period, the temperature of the reaction mixture will be maintained in a range of advantageously from 80-240°C, preferably from 120 to 230°C for about 0. 5 to 3 hours.

The polymer (b-PAEK) of the present invention can notably be used for the manufacture of membranes, films and sheets, and three-dimensional moulded parts.

As per the processing, the polymer (b-PAEK) can be advantageously processed for yielding all above mentioned articles by melt processing (including injection moulding, extrusion moulding, compression moulding), but also by solution processing, because of the solubility of the polymer (b-PAEK).

Non limitative examples of shaped articles which can be manufactured from polymer (b-PAEK) using different processing technologies are generally selected from the group consisting of melt processed films, solution processed films (porous and non porous films, including solution casted membranes, and membranes from solution spinning), melt process monofilaments and fibers, solution processed monofilaments, hollow fibers and solid fibers, and injection and compression molded objects.

Among membranes, the polymer (b-PAEK) of the invention is particularly suitable for manufacturing membranes intended for contact with aqueous media, including body fluids; thus, shaped articles which can be manufactured from the polymer (b-PAEK) as above detailed are advantageously membranes for bioprocessing and medical filtrations, including hemodialysis membranes, membranes for food and beverage processing, membranes for waste water treatment and membranes for industrial process separations involving aqueous media. From an architectural perspective, membranes manufactured from the polymer (b-PAEK) as above detailed may be provided under the form of flat structures (e.g. films or sheets), corrugated structures (such as corrugated sheets), tubular structures, or hollow fibers; as per the pore size is concerned, full range of membranes (non porous and porous, including for microfiltration, ultrafiltration, nanofiltration, and reverse osmosis) can be advantageously manufactured from the polymer (b-PAEK) of the invention; pore distribution can be isotropic or anisotropic.

Shaped articles manufactured from the polymer (b-PAEK) can be, as above mentioned, under the form of films and sheets. These shaped articles are particularly useful as specialized optical films or sheets, and/or suitable for

packaging.

Further, shaped articles manufactured from the polymer (b-PAEK) of the invention can be three-dimensional moulded parts, in particular transparent or coloured parts.

Among fields of use wherein such injection moulded parts can be used, mention can be made of healthcare field, in particular medical and dental applications, wherein shaped articles made from the (b-PAEK) of the invention can advantageously be used for replacing metal, glass and other traditional materials in single-use and reusable instruments and devices.

A further object of the invention are shaped articles manufactured from the polymer (b-PAEK) as above detailed.

Another object of the invention is a method for coating substrates comprising using the polymer (b-PAEK), as described above.

The Applicant has surprisingly found that the polymer (b-PAEK) as above detailed, exhibiting a good combination of excellent chemical resistance, high impact strength, high glass-transition temperature, are useful in providing high performance polymer coatings that adhere well to a variety of substrates, in particular metals resulting in excellent prevention of metal corrosion.

The choice of substrates is not particularly limited. Such coatings may be useful for protecting substrates such as notably metals such as steel, in particular stainless steel, aluminum, copper, and other metals in applications such as food and beverage can coatings, marine-hull protection, aerospace, automotive, wire coating, and electronics and plastics. The polymer (b-PAEK) coating could also be applied to other substrates including glass and carbon fiber cloths, for example, that could be used, after the removal of the solvent, as thermoplastic composites useful in aerospace and automotive applications to replace metal parts.

The Applicant has especially found that the polymer (b-PAEK) of the present invention shows excellent adhesion to stainless steel when applied as a polymer (b-PAEK) solution which resulted in excellent adhesion and improved chemical resistance compared to for example polysulfone polymers, such as notably Udel® polysulfone (PSU).

According to one embodiment of the invention, the method comprises using a liquid composition comprising said polymer (b-PAEK) and at least one liquid medium, wherein said polymer (b-PAEK) solution is at least partially dissolved in a liquid medium.

For the purpose of the invention, the term "liquid medium" is intended to denote a medium which is available in liquid state at a temperature of 25°C.

By the term "dissolved" is meant that the polymer (b-PAEK) is present in solubilised form in the liquid medium.

In this embodiment of the present invention, the polymer (b-PAEK) in said liquid composition is substantially in dissolved form that is to say that more than 90 % wt, preferably more than 95% wt, more preferably than 99 % wt is dissolved in the liquid medium.

The liquid medium according to this embodiment preferably comprises a solvent selected among active solvents for polymer (b-PAEK).

An active solvent for polymer (b-PAEK) is a solvent which is able to dissolve at least 5 % wt of a polymer (b-PAEK) (with respect to the total weight of the solution) at a temperature of 25°C.

Active solvents which can be used in this embodiment are notably dimethylformamide (DMF), dimethylacetamide (DMAC), dimethylsulfoxide (DMSO), N-methyl-2-pyrrolidone (NMP) and the like.

The liquid medium of this embodiment can further comprise one or more of intermediate and/or latent solvents for the polymer (b-PAEK). Nevertheless, the liquid medium will preferably comprise a major amount of the active solvent, most preferably consist essentially of the active solvent. Liquid medium might comprise impurities or other ingredients (e.g. additives, stabilizers...) without these latter modifying the properties of the liquid medium.

The liquid composition comprising polymer (b-PAEK) used in this embodiment advantageously comprises the polymer (b-PAEK), as described above, in an amount equal to or greater than 0.5 wt. %, preferably equal to or greater than 5 wt. %, more preferably equal to or greater than 15 wt. %, most preferably equal to or greater than 20 wt. %, relative to the total weight of the liquid composition.

If desired, the liquid composition of the present invention can further comprise other conventional ingredients used for coatings such as notably viscosity modifiers, lubricants, colorants, filers, stabilizers, and the like with the proviso that said other ingredients are inert and not interact substantially with the polymer (b-PAEK) of the present invention.

Coating technique is not particularly limited. All standard coating techniques suitable for coating compositions comprising a liquid medium can be suitable to this aim. Mention can be notably made of film coating, spray coating, curtain coating, casting, coil coating, roller coating, gravure coating, reverse roll coating, dip coating, spray coating, blade coating and the like.

Techniques particularly adapted for coating substrates with the liquid composition containing polymer (b-PAEK) solution of the invention are notably roller coating, dip coating, spray coating, blade coating.

The method of the invention further comprises drying the layer of liquid composition coated onto the substrate. Drying enables substantial removal of the liquid medium. Drying can be effected at any temperatures, from room temperature onward.

The method preferably comprises submitting the layer comprising the polymer (b-PAEK) to a thermal treatment at a temperature of at least 150°C, preferably at least 200°C, more preferably from 200 to 350°C. Thermal treatment can be effected simultaneously, or alternatively, or further in addition to drying.

The Applicant has surprisingly found that such thermal treatment generally provide an article having an adherent coating comprising the polymer (b-PAEK), as above detailed, possessing outstanding mechanical properties.

Should the disclosure of any patents, patent applications, and publications which are incorporated herein by reference conflict with the description of the present application to the extent that it may render a term unclear, the present description shall take precedence.

The invention will now be described with reference to the following examples, whose purpose is merely illustrative and not intended to limit the scope thereof.

**Example 1**

Isosorbide (22.55 g, 0.1543 moles), 4, 4'- difluorobenzophenone (34.11 g, 0.1563 moles), potassium carbonate (43.94 g, 0.3179 moles), and 88.9 g sulfolane (target 36 wt% polymer solution) were charged to a 500 mL four-neck flask equipped with a mechanical stirrer, thermocouple, nitrogen inlet/outlet, Barrett trap, and condenser. The reaction mixture was heated to 210°C using a temperature-controlled oil bath over one hour and kept at this temperature for three hours under a controlled nitrogen purge to remove water and carbon dioxide. After the reaction mixture achieved an observable high torque on the agitator display, the reaction mixture was diluted with additional sulfolane, and the temperature lowered to 170°C. Next, 15 g methyl chloride gas was bubbled in to the reaction mixture over 30 minutes. After further cooling to about 120°C, the reaction mixture was filtered under pressure through a glass fiber filter (0.2 mm) to remove by-product salts and excess potassium carbonate to yield a clear -15 wt% polymer solution. The polymer solution was then poured in to a Waring blender containing one litre methanol to precipitate a white polymer powder. The polymer powder was isolated by filtration, washed twice with hot de-ionized water and methanol, and then dried at 100°C under reduced pressure until constant weight. The isolated yield of polymer was 89%. The polymer was found to readily dissolve in NMP, DMAc, DMF, and chloroform. The $^1$H-NMR spectrum of the b-PAEK polymer in $CDCl_3$ is shown in Figure 2. The ratio of the integrated peaks due to the aromatic and aliphatic protons indicated the expected equimolar incorporation of the aromatic groups from the benzophenone and the aliphatic rings from the isosorbide. The polymer powder was further analyzed by GPC, TGA and DSC to determine the molecular weight, PDI, and thermal properties (results are summarized in Table 1).

**Example 2**

Same procedure as Example 1 was followed except that NMP was used as the aprotic solvent and the reaction temperature maintained at 180°C for 48 hours. Isolated polymer yield was 87%. The molecular weight and thermal properties are given in Table 1.

**Example 3**

Same as Example 1 except that an equimolar amount of 4,4'-difluorosulfone and 4, 4'- difluorobenzophenone was polymerized with isosorbide to form a PAEK copolymer. Isolated yield was 85%. The molecular weight and thermal properties are reported in Table 1. The single $T_g$ observed in the DSC analysis indicated a mostly random distribution of monomers in the polymer structure.

**Example 4**

Same as Example 1 except that equimolar amounts of bisphenol S and isosorbide were polymerized with 4,4'-difluorobenzophenone to form a PAEK copolymer. The molecular weight and thermal properties are given in Table 1. The single $T_g$ implied a mostly random distribution of monomers in the polymer structure.

**Table 1. Molecular weight and thermal properties for Examples 1-4.**

**Table 1**

| Example # | GPC | | DSC | TGA |
|---|---|---|---|---|
| | Mw, g/mol | PDI | $T_g$,oC | Peak Degradation oC |
| 1 | 58346 | 2.08 | 167.7 | 424 |
| 2 | 12731 | 2.02 | 147.6 | 437 |
| 3 | 89630 | 1.88 | 188.8 | 447 |
| 4 | 57955 | 2.17 | 166.4 | 419 |

**Example 5**

A portion of the polymer from Example 1 was dissolved in excess methylene chloride and the solution poured in to a small aluminum pan. The solvent was slowly evaporated and the resulting clear film dried overnight under vacuum at 50 °C. The film, which had a thickness of around 120 μm, was flexible and creasable indicating good mechanical properties.

Three small strips were cut from the film, dried to constant weight, and then submerged in DI water. After soaking for one day at 23 °C, the films were padded dry of surface water and reweighed. The average amount of water absorbed was1.89 +/- 0.04 wt%. Oven drying the hydrated film samples returned the original pre-soak dry weights to within 0.1 %. As a comparison, commercial PAEK, such as Ketaspire® supplied by Solvay, not comprising recurring units of type $R_b$ as above detailed, absorbs only 0.1 wt% water after one day of soaking in water at 23°C (ASTM 570). Thus, the b-PAEK from Example 1 was found to be more hydrophilic than standard PAEK due to the incorporation of isosorbide in the polymer structure. This increased hydrophilicity is particularly advantageous in filtration applications, e.g. for reducing overpressure required for filtrating aqueous media.

**Example 6**

Isosorbide (90.14 g, 0.617 moles), 4, 4'- difluorobenzophenone (136.43 g, 0.625 moles), potassium carbonate (128.05, 0.926 mol), and 688 g sulfolane were weighed into a 2 L four necked flask equipped with a mechanical stirrer, Dean Stark, condenser, nitrogen inlet/outlet and thermometer. The reaction mixture was heated in an oil bath thermostated at 217°C. The polymerization was carried out for 6 hours at 210°C. After polymerization the reaction mixture was diluted with NMP and precipitated into methanol and washed three times with hot water. Finally, the polymer powder washed again with methanol. White powder was then dried at 100°C under reduced pressure until constant weight. The polymer powder had a molecular weight (Mw) of 98 kDa as measured by GPC. The inherent viscosity ($\eta_{inh}$) of the polymer was found to be 0.59 dL/g using a 0.50 g/dL solution in NMP at 30°C in a size 100 Cannon-Fenske viscometer. $T_g$ observed in the DSC analysis was found to be 241°C (DSC, 10°C/min, $2^{nd}$ heat). The Notched Izod impact was measured according ASTM D256: the polymer powder was compression molded at 255°C, the uniform plaques were cut in to test bars, notched, and the impact strength were measured and the average value of 5 samples was 11.1 ft-lb/in.

**Example 7**

Isosorbide (4.967 g, 0.034 moles), 4, 4'- difluorobenzophenone (7.64 g, 0.035 mmol), potassium carbonate (4.84 g, 0.035 moles), phosphazenium salt catalyst (0.003 moles) and 70 g sulfolane were weighed into a 250 mL four necked flask equipped with a mechanical stirrer, Dean Stark, condenser, nitrogen inlet/outlet and thermometer. The reaction mixture was heated in an oil bath thermostated at 145°C. The polymerization was carried out for 20 hours at 140°C. After polymerization the reaction mixture was precipitated into methanol and washed three times with hot water. Finally, the polymer powder washed again with methanol. White powder was then dried at 100°C under reduced pressure until constant weight. The inherent viscosity ($\eta_{inh}$) of the polymer was found to be 0.17 dL/g using a 0.50 g/dL solution in NMP at 30°C in a size 100 Cannon-Fenske viscometer. $T_g$ observed in the DSC analysis was found to be 137°C (DSC, 10°C/min, $2^{nd}$ heat).

**Example 8**

Bis(2-hydroxyethyl)isosorbide (2.57 g, 0.011 moles), 4, 4'-difluorobenzophenone (2.40 g, 0.011 moles), potassium carbonate (2.76 g, 0.020 moles), and 10.1 g sulfolane (target 36 wt% polymer solution) were charged to a 500 mL four-neck flask equipped with a mechanical stirrer, thermocouple, nitrogen inlet/outlet, Barrett trap, and condenser. The

reaction mixture was heated to 210°C using a temperature-controlled oil bath over one hour and kept at this temperature for seven hours under a controlled nitrogen purge to remove water and carbon dioxide. The viscous reaction mixture was cooled, diluted with NMP, filtered to remove potassium salts, and then coagulated in acidified deionized water to give a fibrous off-white solid polymer. The polymer was washed with water and methanol and dried in a vacuum oven at 40°C for two days. The inherent viscosity ($\eta_{inh}$) of the polymer was found to be 0.18 dL/g using a 0.50 g/dL solution in NMP at 30°C in a size 100 Cannon-Fenske viscometer. $T_g$ observed in the DSC analysis was found to be 59°C (DSC, 10°C/min, 2$^{nd}$ heat).

**Application of a coating solution onto a substrate**

The adhesive strength of a coating has been evaluated by peel tests using common adhesive tapes and by observing delamination of a mechanically deformed portion of the coated surface. For this purpose, the Erichsen cupping test is used which is a ductility test, which is employed to evaluate the ability of metallic sheets and strips to undergo plastic deformation in stretch forming. The test consists of forming an indentation by pressing a punch with a spherical end against a test piece clamped between a blank holder and a die, until a through crack appears. The depth of the cup is then measured. Relative chemical resistance can be judged by subjecting the coated substrates in aggressive environments such as strong acid and to standard wipe tests using solvents such as methyl ethyl ketone (MEK).

**Example 9**

A 20 wt. % solution of a b-PAEK polymer having a molecular weight (Mw) of 51100 g/moles as determined by GPC and $T_g$ of 187°C as determined by DSC, in NMP was prepared and applied to a stainless steel coupon (previously washed with a 3.6% sodium carbonate solution and wiped with a moist towel) using a 6 mil BYK Gardner film coating blade. The polymer/solvent-coated coupon was placed in a convection oven at 225°C for 15 minutes and then removed from the oven to cool. A clear, solvent-free coating layer on the coupon with uniform thickness of around 30 $\mu$m was observed. Next, a cross-hatch pattern (5x5 cross-hatch) was scratched in to the coating using a common technique and adhesive tape applied and removed. No sign of delamination was observed after removing the tape. A concave surface was created over the cross-hatched pattern (25 squares total) using an Erichsen Cupping Tester. The resulting cupped surface was then examined under a microscope. Only 6 of the squares showed signs of delamination (24%).

**Example 10**

A polymer coated steel coupon was prepared in the same way as described in Example 9 except that commercial polysulfone (PSU), such as UDEL® P1800 polysulfone supplied by Solvay, was used. A cross-hatch pattern was applied which also did not delaminate after applying and removing adhesive tape. A concave surface was created over the cross-hatch pattern as described above. Delamination was observed in 20 of the 25 squares (80%).

**Example 11**

A 20 wt. % solution of a b-PAEK polymer having a molecular weight (Mw) of 51200 g/moles as determined by GPC and $T_g$ of 187°C as determined by DSC, in NMP as determined by DSC, in NMP was prepared and applied to a stainless steel coupon (previously washed with a 3.6% sodium carbonate solution and wiped with a moist towel) using a 6 mil BYK Gardner film coating blade. The polymer/solvent-coated coupon was placed in a convection oven at 220°C for 10 minutes, and then 260°C for 25 minutes. The coupon was then placed in a beaker containing concentrated hydrochloric acid (38%) and heated to 45°C for seven minutes. The coupon was removed from the bath, washed in deionized water, and then dried with a towel. The coupon showed only a very small delamination on the edge of the coupon, but the rest of the steel appeared to be virtually unchanged.

**Example 12**

A polymer coated steel coupon was prepared in the same way as described in Example 11 except that a commercial polysulfone (PSU), namely UDEL® P1800 polysulfone supplied by Solvay, was used and subjected to the same acid bath as described in Example 11. Extensive delamination of the film along with visible corrosion of the steel was observed.

**Example 13**

A 20 wt. % solution of a b-PAEK polymer having a molecular weight (Mw) of 51200 g/moles as determined by

GPC and $T_g$ of 187 C as determined by DSC, in NMP as determined by DSC, in NMP was prepared and applied to a stainless steel coupon (previously washed with a 3.6% sodium carbonate solution and wiped with a moist towel) using a 6 mil BYK Gardner film coating blade. The polymer/solvent-coated coupon was placed in a convection oven at 220°C for 10 minutes. A towel soaked in methyl ethyl ketone (MEK) was rubbed over the surface of the coated coupon 50 times. No change in the appearance of the coating was observed and no detectable change in sample weight was observed.

**Example 14**

A polymer coated steel coupon was prepared in the same way as described in Example 13 except that c a commercial polysulfone (PSU), namely UDEL® P1800 polysulfone supplied by Solvay, was used and wiped with MEK as described in Example 13. Some of the coating was visually seen to be removed during this test.

**Preparation of dense polymer films sample for contact angle measurement**

**Example 15**

A 20 wt. % solution of the polymer from Example 1 in NMP was prepared and the solution poured in to a small aluminum pan. NMP was slowly evaporated on the hot plate at 100°C for 10 hours. The resulting film was transferred to a vacuum oven at 140°C overnight to remove residual NMP. After drying, the film was transparent and creasable. As a comparison, films of commercial PAEK, namely Ketaspire® supplied by Solvay, commercial polysulfone (PSU), namely UDEL® P1800 polysulfone supplied by Solvay, and commercial polyethersulfone (PES), namely Radel® polyethersulfone supplied by Solvay, were prepared in the same way. These films were used for contact angle measurements. Results are summarized in Table 2.

**Contact Angle Measurement**

Static contact Angle versus $H_2O$ MilliQ was measured on both sides of the film at time zero. Solvent is $H_2O$ Milli Q and $\theta_M$ is measured over an average on 20 drop. Deposition of the droplet was performed in automatic mode (drop volume: 2μl). The instrument used for measurements was DataPhysics OCA 20 Static Contact Angle.

**Table 2. Contact Angle (θM, °) for Example 5.**

**Table 2**

| Polymer | Contact Angle (θM) |
|---|---|
| | ° |
| b-PAEK polymer from Example 1 | 76 |
| Ketaspire® PAEK | 85 |
| UDEL® P1800 polysulfone (PSU) | 84 |
| Radel® polyethersulfone (PES) | 89 |

**Claims**

**1.** A polyarylene ether ketone [polymer (b-PAEK)] comprising recurring units of formula ($R_b$):

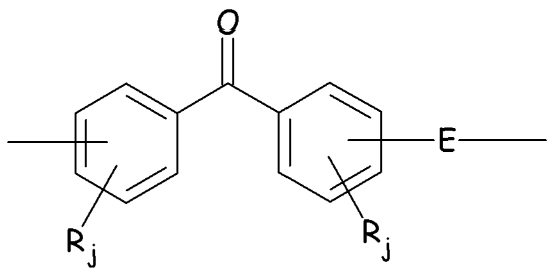

(formula $R_b$)

wherein:

- E is selected from the group consisting of:

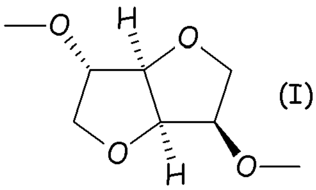

(I)

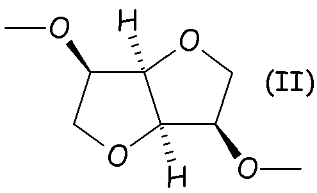

(II)

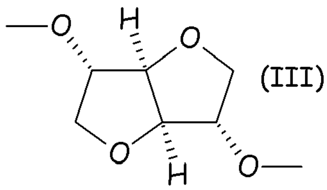

(III)

each of R, equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j is zero or is an integer from 1 to 4,

said polymer (b-PAEK) having a weight average molecular weight of at least 10 000. as measured by gel-permeation chromatography GPC calibrated with polystyrene standards.

**2.** The polymer (b-PAEK) of claim 1, wherein said recurring units ($R_b$) are selected from the group consisting of:

units of formula ($R_b$-I):

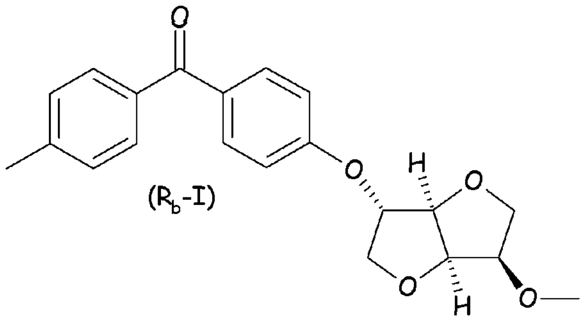

($R_b$-I)

units of formula ($R_b$-2):

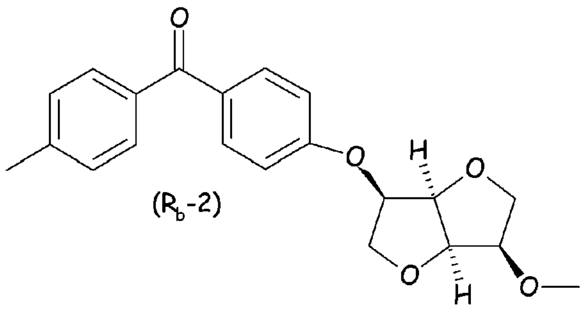

units of formula ($R_b$-3):

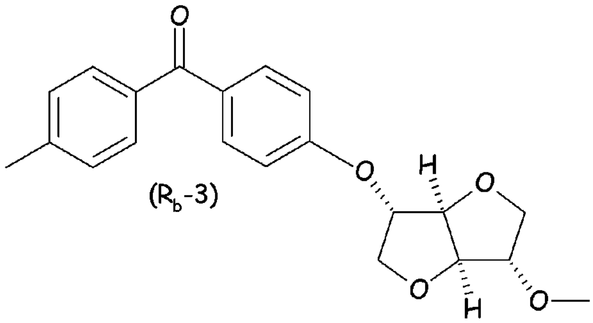

**3.** The polymer (b-PAEK) of claim 1, additionally comprising recurring units different from units (Rb), said additional recurring units being derived from the polycondensation of one or more diols different from the 1,4:3,6-dianhydrohexitols and/or from the polycondensation of one or more dihaloaryl compound different from dihaloketocompound of formula:

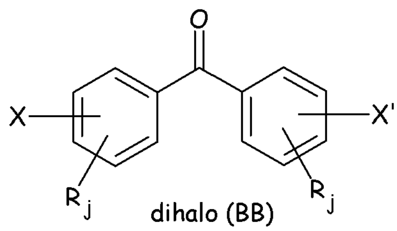

wherein X and X', equal to or different from each other, are halogens, and R and j have the meaning as detailed in claim 1.

**4.** The polymer (b-PAEK) of claim 3, wherein said additional recurring units are recurring units ($R_a$) comprising a Ar-C(O)-Ar' group, with Ar and Ar', equal to or different from each other, being aromatic groups, said recurring units ($R_a$) being generally selected from the group consisting of formulae (J-A) to (J-O), herein below:

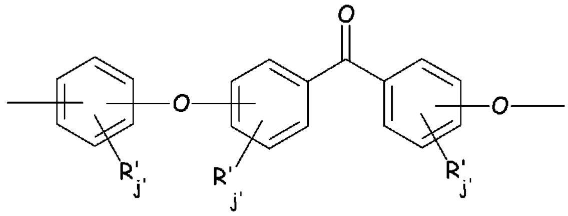

(J-A)

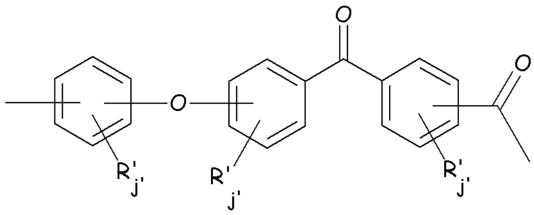

(J-B)

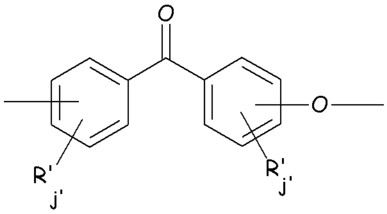

(J-C)

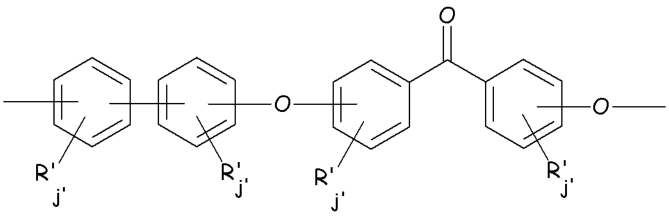

(J-D)

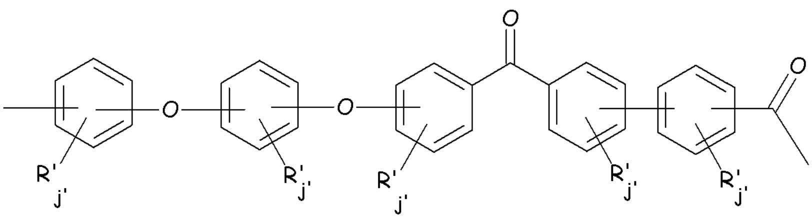

(J-E)

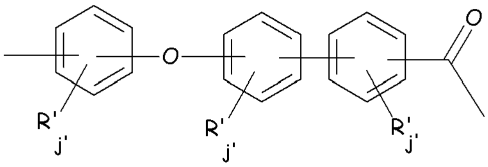

(J-F)

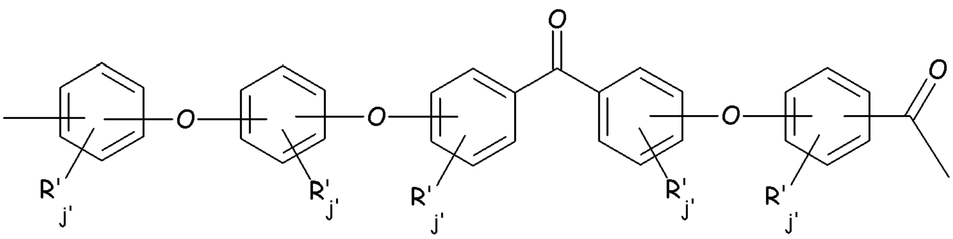

(J-G)

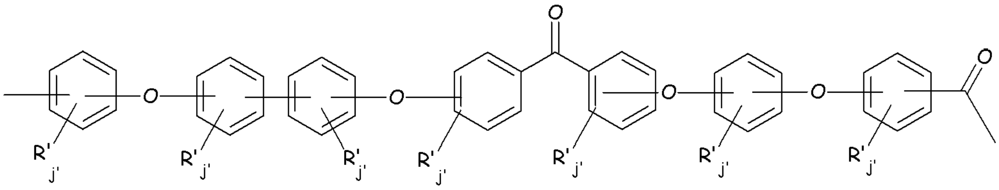

(J-H)

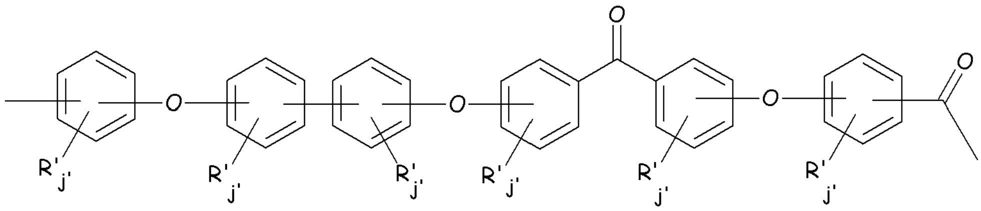

(J-I)

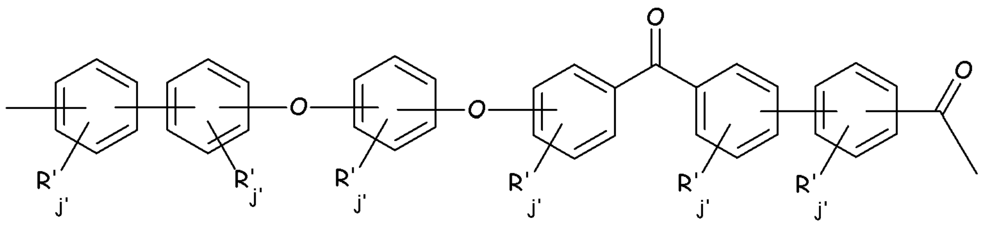

(J-J)

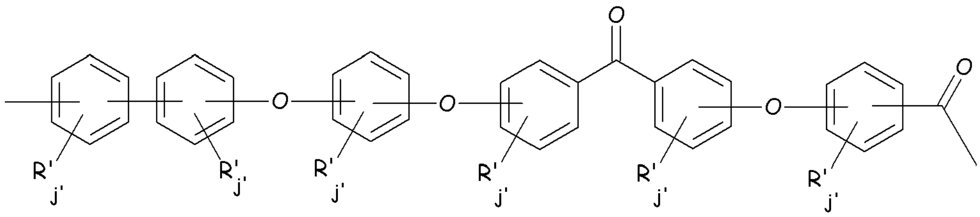

(J-K)

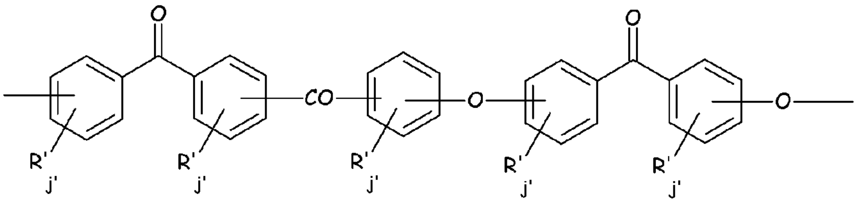

(J-L)

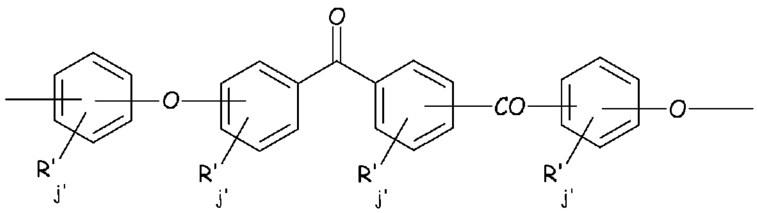

(J-M)

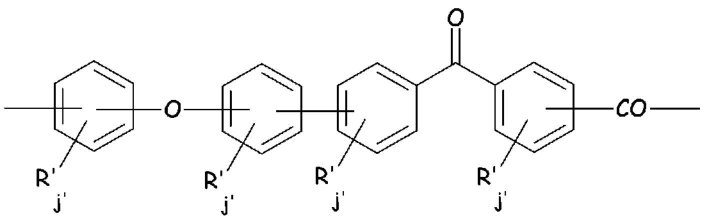

(J-N)

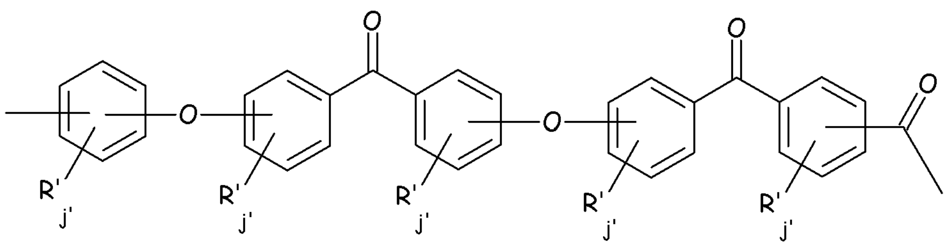

(J-O)

wherein:

- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j' is zero or is an integer from 0 to 4.

**5.** The polymer (b-PAEK) of claim 3, wherein said additional recurring units are recurring units ($R_c$) comprising a $Ar-SO_2-Ar'$ group, with Ar and Ar', equal to or different from each other, being aromatic groups, said recurring units ($R_c$) generally complying with either of formulae:

(S1): $-Ar^1-(T'-Ar^2)_n-O-Ar^3-SO_2-[Ar^4-(T-Ar^2)_n-SO_2]_m-Ar^5-O-$

(S2): $-E'-O-Ar^3-SO_2-(Ar^4-SO_2)_m-Ar^5-O-$

wherein:

- $Ar^1$, $Ar^2$, $Ar^3$, $Ar^4$, and $Ar^5$, equal to or different from each other and at each occurrence, are independently a aromatic mono- or polynuclear group;
- T and T', equal to or different from each other and at each occurrence, is independently a bond or a divalent group optionally comprising one or more than one heteroatom; preferably T' is selected from the group consisting of a bond, $-CH_2-$, $-C(O)-$, $-C(CH_3)_2-$, $-C(CF_3)_2-$, $-C(=CCl_2)-$, $-C(CH_3)(CH_2CH_2COOH)-$, $-SO_2-$, and a group of formula:

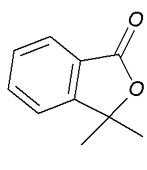

,

and preferably T is selected from the group consisting of a bond, $-CH_2-$, $-C(O)-$, $-C(CH_3)_2-$, $-C(CF_3)_2-$, $-C(=CCl_2)-$, $-C(CH_3)(CH_2CH_2COOH)-$, and a group of formula:

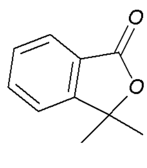

,

and
- n and m, equal to or different from each other, are independently zero or an integer of 1 to 5;
- E' is a group selected from the group consisting of formulae (E'-I), (E'-II) and (E'-III):

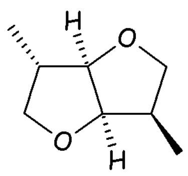 (E'-I) 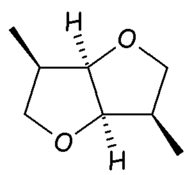 (E'-II) 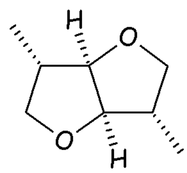 (E'-III).

**6.** A process for manufacturing the polyarylene ether ketone [polymer (b-PAEK)] according to anyone of the preceding claims, said process comprising reacting in a solvent mixture comprising a polar aprotic solvent:

- at least one 1,4:3,6-dianhydrohexitol [diol (AA)] selected from the group consisting of isosorbide (1), isomannide (2) and isoidide (3):

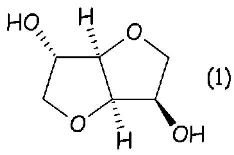 (1) 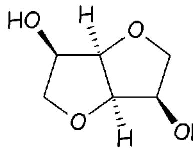 (2) 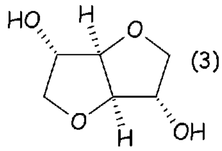 (3)

- at least one dihalobenzoid compound [dihalo (BB)] of formula:

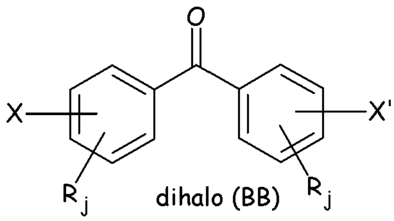

dihalo (BB)

wherein:

- each of R, equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j is zero or is an integer from 1 to 4;
- X and X', equal to or different from each other, are independently a halogen atom, preferably Cl or F, more preferably F;

said diol (AA) and dihalo (BB) being reacted in substantially equimolecular amount, in the presence of an alkali metal carbonate.

**7.** The process of claim 6, said process comprising additionally reacting in said solvent mixture at least one of:

- dihydroxyl compound [diol (A'A')] different from diol (AA), as above detailed;
- dihaloaryl compound [dihalo (B'B')] different from dihalo (BB), as above detailed; and
- a hydroxyl-halo compound [hydro-halo (A'B')],

wherein the process is intended to manufacture polymer (b-PAEK) comprising recurring units different from ($R_b$), and wherein the overall amount of halo-groups and hydroxyl-groups is substantially equimolecular.

**8.** The process of claim 7, said process comprising additionally reacting in said solvent mixture at least one dihaloaryl compound [dihalo(B'B')] different from dihalo (BB) selected from the group consisting of compounds of formula (S):

$$X\text{-}Ar^3\text{-}SO_2\text{-}[Ar^4\text{-}(T\text{-}Ar^2)_n\text{-}SO_2]_m\text{-}Ar^5\text{-}X \qquad \text{formula (S)}$$

wherein:

- n and m, equal to or different from each other, are independently zero or an integer of 1 to 5;
- X is an halogen selected from F, Cl, Br, I ;
- each of $Ar^2$, $Ar^3$, $Ar^4$, $Ar^5$ equal to or different from each other and at each occurrence, is an aromatic moiety of the formula :

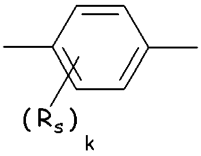

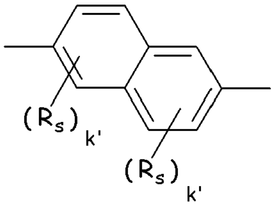

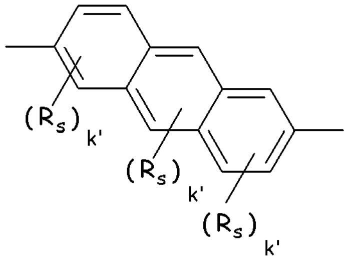

wherein:

- each $R_s$ is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- k is zero or an integer of 1 to 4; k' is zero or an integer of 1 to 3;
- T is a bond or a divalent group optionally comprising one or more than one heteroatom; preferably T is selected from the group consisting of a bond, $-CH_2-$, -C(O)-, $-C(CH_3)_2-$, $-C(CF_3)_2-$, $-C(=CCl_2)-$, $-C(CH_3)(CH_2CH_2COOH)-$, and a group of formula:

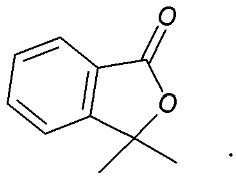
.

**9.** The process of claim 7, said process comprising additionally reacting in said solvent mixture at least one dihydroxyl compound [diols (A'A')] different from diol (AA) selected from the group consisting of compounds of formula (O):

$HO-Ar^1-(T'-Ar^2)_n-OH$ formula (O)

wherein:

- n is zero or an integer of 1 to 5;
- each of $Ar^1$ and $Ar^2$, equal to or different from each other and at each occurrence, is an aromatic moiety of the formula :

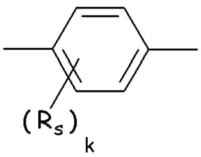

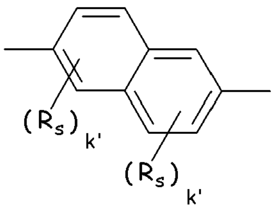

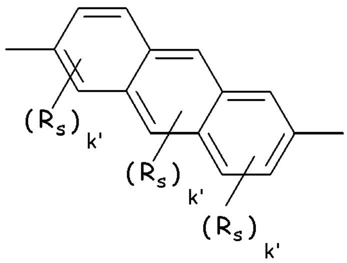

wherein:

- each $R_s$ is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- k is zero or an integer of 1 to 4; k' is zero or an integer of 1 to 3;
- T' is a bond or a divalent group optionally comprising one or more than one heteroatom; preferably T' is selected from the group consisting of a bond, $-SO_2-$, $-CH_2-$, -C(O)-, $-C(CH_3)_2-$, $-C(CF_3)_2-$, $-C(=CCl_2)-$, $-C(CH_3)(CH_2CH_2COOH)-$, and a group of formula:

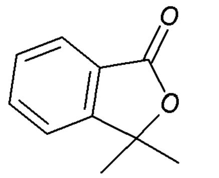

.

10. Use of the polyarylene ether ketone [polymer (b-PAEK)] of anyone of claims 1 to 5 for the manufacture of membranes, films and sheets, and three-dimensional moulded parts.

11. Shaped articles manufactured from polymer (b-PAEK) of anyone of claims 1 to 5 selected from the group consisting of melt processed films, solution processed films, melt process monofilaments and fibers, solution processed monofilaments, hollow fibers and solid fibers, and injection and compression molded objects.

12. Shaped articles manufactured from polymer (b-PAEK) of anyone of claims 1 to 5 selected from membranes for bioprocessing and medical filtrations, including hemodialysis membranes, membranes for food and beverage processing, membranes for waste water treatment and membranes for industrial process separations involving aqueous media.

13. Shaped articles manufactured from the polymer (b-PAEK) of anyone of claims 1 to 5 selected from films and sheets.

14. A method for coating substrates comprising using the polymer (b-PAEK) of anyone of claims 1 to 5, said method comprising using a liquid composition comprising said polymer (b-PAEK) and at least one liquid medium, wherein said polymer (b-PAEK) solution is at least partially dissolved in a liquid medium.

15. The method of claim 13 or 14, which comprises submitting the layer comprising the polymer (b-PAEK) to a thermal treatment at a temperature of at least 150°C, preferably at least 200°C, more preferably from 200 to 350°C.

## Patentansprüche

1. Polyarylenetherketon [Polymer (b-PAEK)], umfassend Wiederholungseinheiten der Formel ($R_b$) :

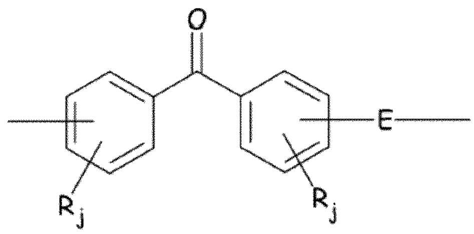

(Formel $R_b$)

wobei:

- E ausgewählt ist aus der Gruppe bestehend aus :

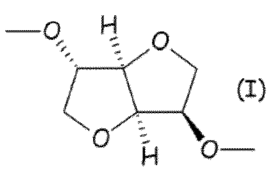 (I) 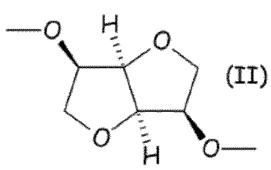 (II) 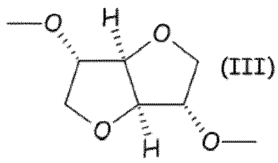 (III)

,

- jedes R, die gleich oder voneinander verschieden sind, ausgewählt ist aus der Gruppe bestehend aus Halogen,

Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quaternärem Ammonium;
- j null ist oder eine ganze Zahl von 1 bis 4 ist,

wobei das Polymer (b-PAEK) ein gewichtsgemitteltes Molekulargewicht von wenigstens 10.000 aufweist, wie gemessen durch Gelpermeationschromatographie GPC, kalibriert mit Polystyrolstandards.

**2.** Polymer (b-PAEK) gemäß Anspruch 1, wobei die Wiederholungseinheiten ($R_b$) ausgewählt sind aus der Gruppe bestehend aus :

Einheiten der Formel ($R_b$-I) :

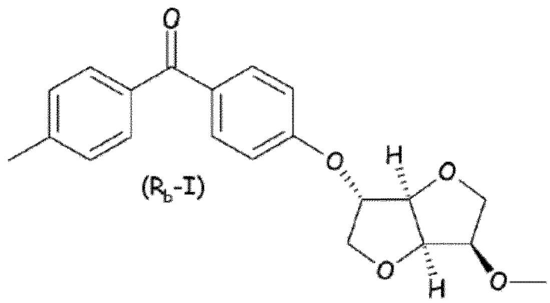

Einheiten der Formel ($R_b$-2) :

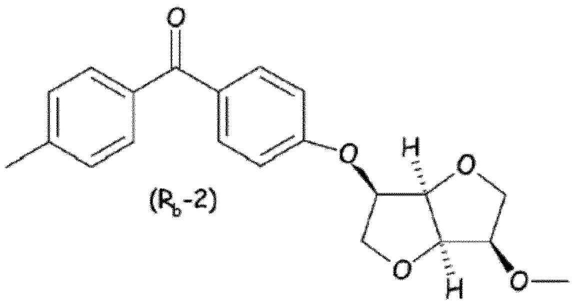

Einheiten der Formel ($R_b$-3) :

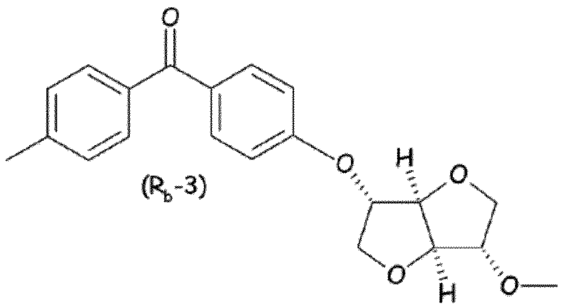

**3.** Polymer (b-PAEK) gemäß Anspruch 1, zusätzlich umfassend Wiederholungseinheiten, die von Einheiten (Rb) verschieden sind, wobei die zusätzlichen Wiederholungseinheiten durch Polykondensation eines oder mehrerer Diole, die von den 1,4:3,6-Dianhydrohexitolen verschieden sind, und/oder durch Polykondensation einer oder mehrerer Dihalogenarylverbindungen, die von der Dihalogenketoverbindungen der Formel:

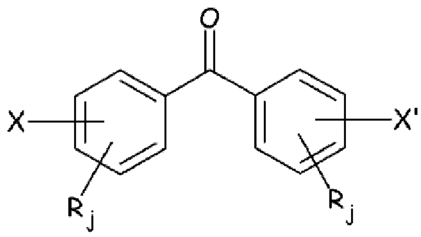

Dihalo (BB)

verschieden sind, wobei X und X', die gleich oder voneinander verschieden sind, Halogene sind und R und j die in Anspruch 1 gegebenen Bedeutungen haben, abgeleitet sind.

**4.** Polymer (b-PAEK) gemäß Anspruch 3, wobei die zusätzlichen Wiederholungseinheiten Wiederholungseinheiten ($R_a$) sind, die eine Ar-C(O)-Ar'-Gruppe umfassen, wobei Ar und Ar', die gleich oder voneinander verschieden sind, aromatische Gruppen sind, wobei die Wiederholungseinheiten ($R_a$) allgemein ausgewählt sind aus der Gruppe bestehend aus den nachstehenden Formeln (J-A) bis (J-O) :

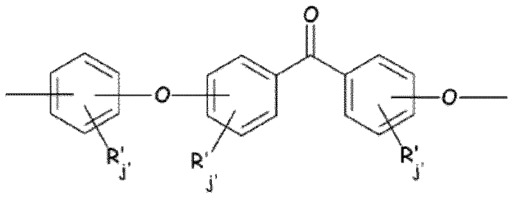

(J-A)

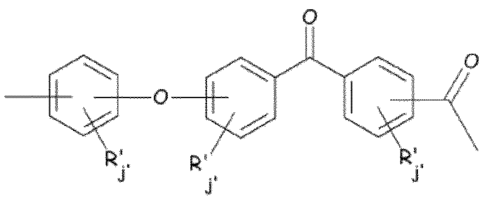

(J-B)

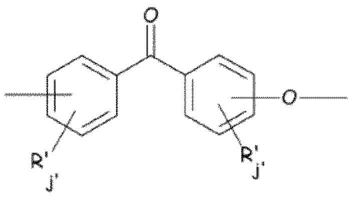

(J-C)

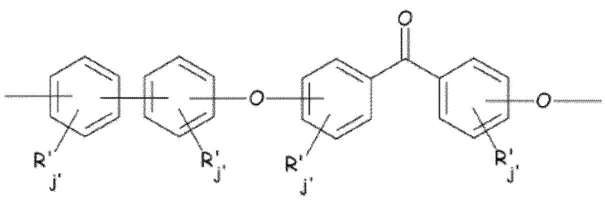

(J-D)

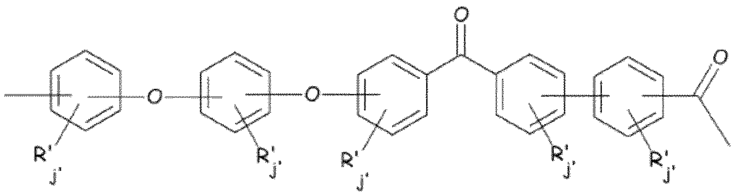

(J-E)

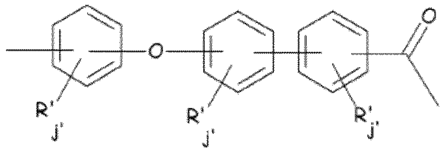

(J-F)

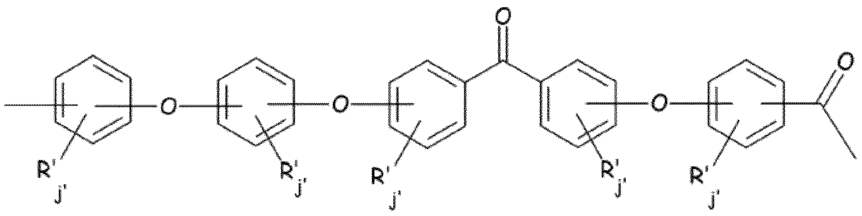

(J-G)

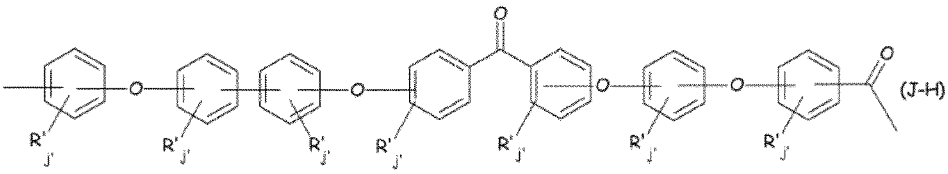

(J-H)

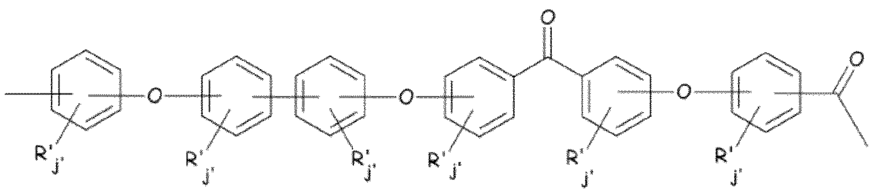

(J-I)

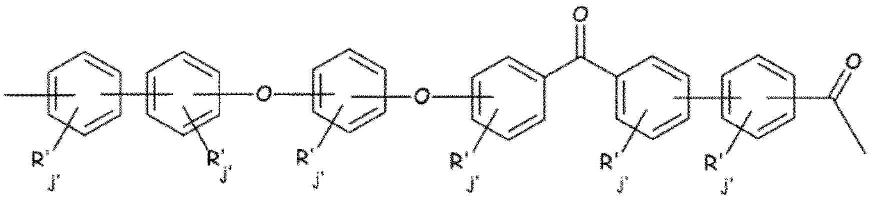

(J-J)

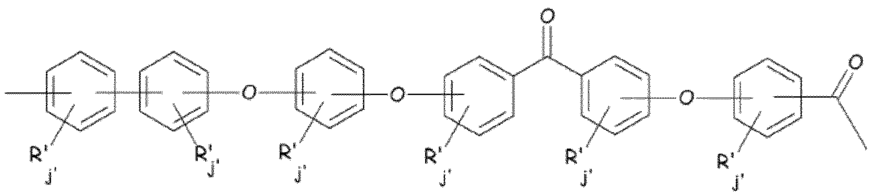

(J-K)

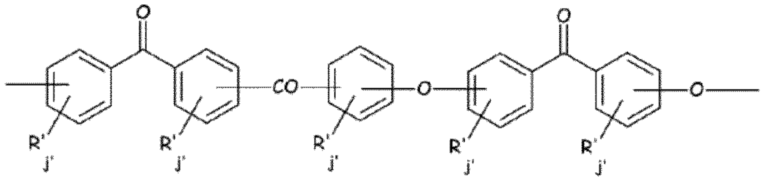
(J-L)

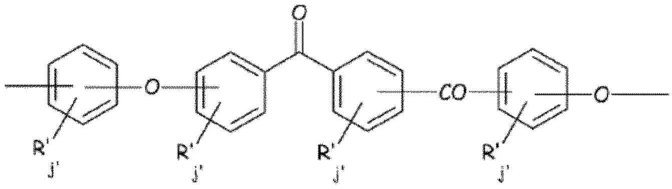
(J-M)

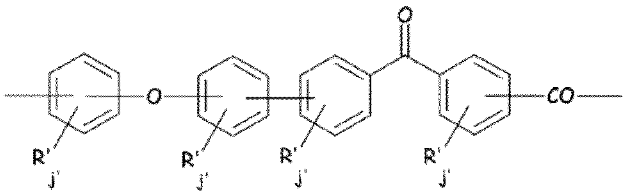
(J-N)

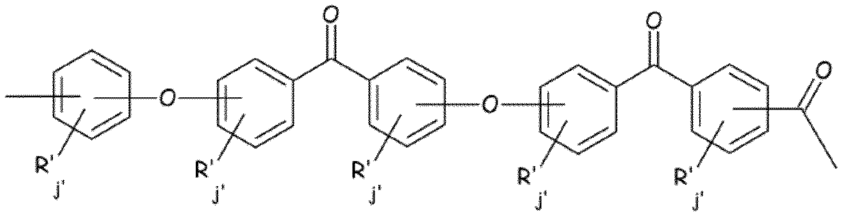
(J-O)

wobei:

- jedes R', die gleich oder voneinander verschieden sind, ausgewählt ist aus der Gruppe bestehend aus Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quaternärem Ammonium;
- j' null ist oder eine ganze Zahl von 0 bis 4 ist.

**5.** Polymer (b-PAEK) gemäß Anspruch 3, wobei die zusätzlichen Wiederholungseinheiten Wiederholungseinheiten ($R_c$) sind, die eine Ar-$SO_2$-Ar'-Gruppe umfassen, wobei Ar und Ar', die gleich oder voneinander verschieden sind, aromatische Gruppen sind, wobei die Wiederholungseinheiten ($R_c$) allgemein einer der Formeln :

(S1): $-Ar^1-(T'-Ar^2)_n-O-Ar^3-SO_2-[Ar^4-(T-Ar^2)_n-SO_2]_m-Ar^5-O-$

(S2): $-E'-O-Ar^3-SO_2-(Ar^4-SO_2)_m-Ar^5-O-$

entsprechen, wobei:

- $Ar^1$, $Ar^2$, $Ar^3$, $Ar^4$ und $Ar^5$, die gleich oder voneinander verschieden sind, bei jedem Auftreten unabhängig eine aromatische ein- oder mehrkernige Gruppe sind;
- T und T', die gleich oder voneinander verschieden sind, bei jedem Auftreten unabhängig eine Bindung oder eine zweiwertige Gruppe sind, die gegebenenfalls ein oder mehr als ein Heteroatom umfasst; wobei T' vorzugsweise ausgewählt ist aus der Gruppe bestehend aus einer Bindung, $-CH_2-$, -C(O)-, $-C(CH_3)_2-$, $-C(CF_3)_2-$, $-C(=CCl_2)-$, $-C(CH_3)(CH_2CH_2COOH)-$, $-SO_2-$ und einer Gruppe der Formel:

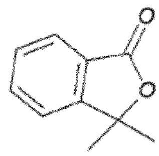

,

und T vorzugsweise ausgewählt ist aus der Gruppe bestehend aus einer Bindung, $-CH_2-$, -C(O)-, $-C(CH_3)_2-$, $-C(CF_3)_2-$, $-C(=CCl_2)-$, $-C(CH_3)(CH_2CH_2COOH)-$ und einer Gruppe der Formel:

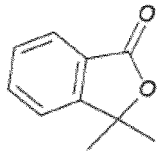

,

und

- n und m, die gleich oder voneinander verschieden sind, unabhängig null oder eine ganze Zahl von 1 bis 5 sind;
- E' eine Gruppe ausgewählt aus der Gruppe bestehend aus den Formeln (E'-I), (E'-II) und (E'-III) ist :

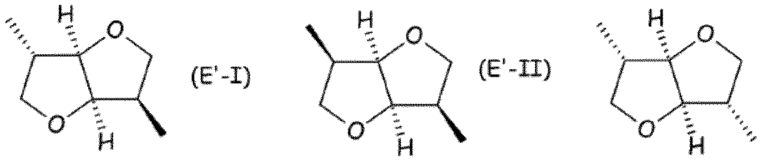

(E'-I) (E'-II) (E'-III) .

6. Verfahren zum Herstellen des Polyarylenetherketons [Polymer (b-PAEK)] gemäß einem der vorstehenden Ansprüche, wobei das Verfahren Umsetzen von :

- wenigstens einem 1,4;3,6-Dianhydrohexitol [Diol (AA)] ausgewählt aus der Gruppe bestehend aus Isosorbid (1), Isomannid (2) und Isoidid (3) :

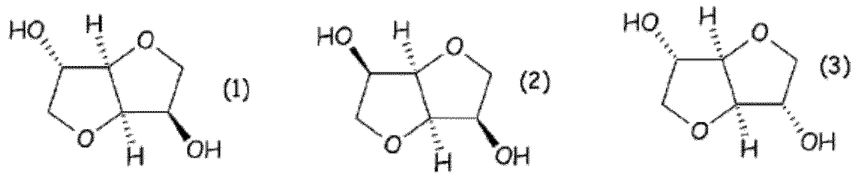

(1) (2) (3)

- wenigstens einer Dihalogenbenzoidverbindung [Dihalo (BB)] der Formel:

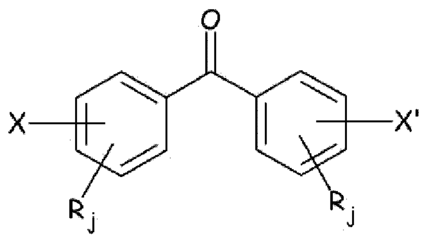

Dihalo (BB)

wobei:

- jedes R, die gleich oder voneinander verschieden sind, ausgewählt ist aus der Gruppe bestehend aus

Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quaternärem Ammonium;
- j null ist oder eine ganze Zahl von 1 bis 4 ist,
- X und X', die gleich oder voneinander verschieden sind, unabhängig ein Halogenatom sind, vorzugsweise Cl oder F, bevorzugter F;

wobei das Diol (AA) und das Dihalo (BB) in im Wesentlichen äquimolarer Menge umgesetzt werden, in einem Lösungsmittelgemisch, das ein polares aprotisches Lösungsmittel umfasst, in Gegenwart eines Alkalimetallcarbonats umfasst.

7. Verfahren gemäß Anspruch 6, wobei das Verfahren zusätzlich Umsetzen wenigstens eines von :

- einer Dihydroxyverbindung [Diol(A'A')], die von dem vorstehend beschriebenen Diol (AA) verschieden ist;
- einer Dihalogenarylverbindung [Dihalo (B'B')], die von dem vorstehend beschriebenen Dihalo (BB) verschieden ist; und
- einer Hydroxyhalogenverbindung [Hydrohalo (A'B')]

in dem Lösungsmittelgemisch umfasst, wobei das Verfahren dafür vorgesehen ist, ein Polymer (b-PAEK) herzustellen, das von ($R_b$) verschiedene Wiederholungseinheiten umfasst, und wobei die Gesamtmenge von Halogengruppen und Hydroxygruppen im Wesentlichen äquimolar ist.

8. Verfahren gemäß Anspruch 7, wobei das Verfahren zusätzlich Umsetzen wenigstens einer Dihalogenarylverbindung [Dihalo (B'B')], die von Dihalo (BB) verschieden ist, ausgewählt aus der Gruppe bestehend aus Verbindungen der Formel (S), in dem Lösungsmittelgemisch umfasst :

$$X\text{-}Ar^3\text{-}SO_2\text{-}[Ar^4\text{-}(T\text{-}Ar^2)_n\text{-}SO_2]_m\text{-}Ar^5\text{-}X \qquad \text{(Formel (S),}$$

wobei:

- n und m, die gleich oder voneinander verschieden sind, unabhängig null oder eine ganze Zahl von 1 bis 5 sind;
- X ein Halogen ausgewählt aus F, Cl, Br, I ist;
- jedes von $Ar^2$, $Ar^3$, $Ar^4$, $Ar^5$, die gleich oder voneinander verschieden sind, bei jedem Auftreten eine aromatische Einheit der Formel:

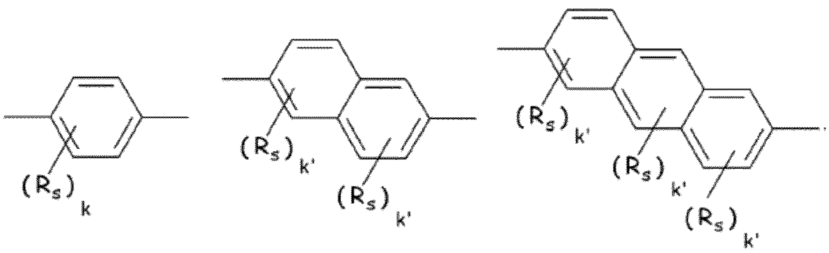

ist, wobei:

- jedes $R_s$ unabhängig ausgewählt ist aus der Gruppe bestehend aus Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quaternärem Ammonium; und
- k null oder eine ganze Zahl von 1 bis 4 ist; k' null oder eine ganze Zahl von 1 bis 3 ist;
- T eine Bindung oder eine zweiwertige Gruppe ist, die gegebenenfalls ein oder mehr als ein Heteroatom umfasst; wobei T vorzugsweise ausgewählt ist aus der Gruppe bestehend aus einer Bindung, $-CH_2-$, $-C(O)-$, $-C(CH_3)_2-$, $-C(CF_3)_2-$, $-C(=CCl_2)-$, $-C(CH_3)(CH_2CH_2COOH)-$ und einer Gruppe der Formel:

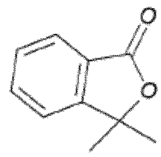

**9.** Verfahren gemäß Anspruch 7, wobei das Verfahren zusätzlich Umsetzen wenigstens einer Dihydroxyverbindung [Diol(A'A')], die von Diol (AA) verschieden ist, ausgewählt aus der Gruppe bestehend aus Verbindungen der Formel (O), in dem Lösungsmittelgemisch umfasst :

$$HO\text{-}Ar^1\text{-}(T\text{-}Ar^2)_n\text{-}OH \qquad \text{Formel (O)}$$

wobei:

- n null oder eine ganze Zahl von 1 bis 5 ist;
- jedes von $Ar^1$ und $Ar^2$, die gleich oder voneinander verschieden sind, bei jedem Auftreten eine aromatische Einheit der Formel:

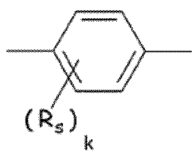 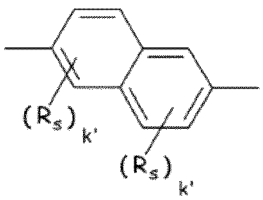 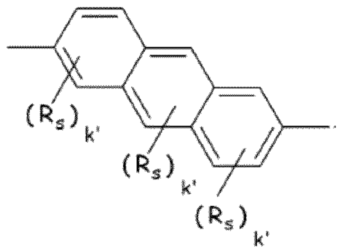

ist, wobei:

- jedes $R_s$ unabhängig ausgewählt ist aus der Gruppe bestehend aus Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quaternärem Ammonium; und
- k null oder eine ganze Zahl von 1 bis 4 ist; k' null oder eine ganze Zahl von 1 bis 3 ist;
- T' eine Bindung oder eine zweiwertige Gruppe ist, die gegebenenfalls ein oder mehr als ein Heteroatom umfasst; wobei T' vorzugsweise ausgewählt ist aus der Gruppe bestehend aus einer Bindung, $-SO_2-$, $-CH_2-$, $-C(O)-$, $-C(CH_3)_2-$, $-C(CF_3)_2-$, $-C(=CCl_2)-$, $-C(CH_3)(CH_2CH_2COOH)-$ und einer Gruppe der Formel:

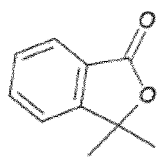

**10.** Verwendung des Polyarylenetherketons [Polymer (b-PAEK)] gemäß einem der Ansprüche 1 bis 5 für die Herstellung von Membranen, Filmen und Folien sowie dreidimensionalen Formteilen.

**11.** Formkörper, hergestellt aus dem Polymer (b-PAEK) gemäß einem der Ansprüche 1 bis 5, ausgewählt aus der Gruppe bestehend aus schmelzverarbeiteten Filmen, lösungsverarbeiteten Filmen, Schmelzverfahren-Monofilamenten und -Fasern, lösungsverarbeiteten Monofilamenten, Hohlfasern und Massivfasern, und spritz- und pressgegossenen Gegenständen.

**12.** Formkörper, hergestellt aus dem Polymer (b-PAEK) gemäß einem der Ansprüche 1 bis 5, ausgewählt aus Membranen für die Bioverarbeitung und medizinische Filtration, einschließlich Hämodialysemembranen, Membranen für die Lebensmittel- und Getränkeverarbeitung, Membranen für die Abwasserbehandlung und Membranen für industrielle Trennverfahren unter Beteiligung wässriger Medien.

**13.** Formkörper, hergestellt aus dem Polymer (b-PAEK) gemäß einem der Ansprüche 1 bis 5, ausgewählt aus Filmen und Folien.

**14.** Verfahren zum Beschichten von Substraten, umfassend die Verwendung des Polymers (b-PAEK) gemäß einem der Ansprüche 1 bis 5, wobei das Verfahren Verwenden einer flüssigen Zusammensetzung umfassend das Polymer (b-PAEK) und wenigstens ein flüssiges Medium umfasst, wobei die Polymer(b-PAEK)-Lösung wenigstens teilweise in einem flüssigen Medium gelöst ist.

**15.** Verfahren gemäß Anspruch 13 oder 14, umfassend Unterwerfen der Schicht, die das Polymer (b-PAEK) umfasst, an eine Wärmebehandlung bei einer Temperatur von wenigstens 150°C, vorzugsweise wenigstens 200°C, bevorzugter von 200 bis 350°C.

**Revendications**

**1.** Polyarylène éther cétone [polymère (b-PAEK)] comprenant des unités structurales ayant la formule ($R_b$) :

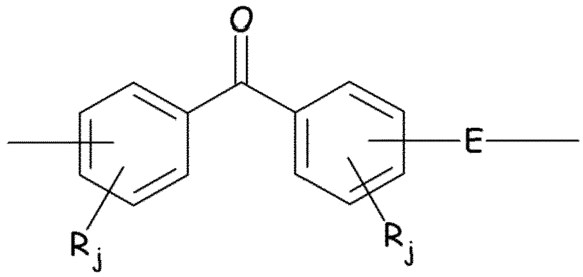

(formule $R_b$)

dans laquelle :

- E est sélectionné dans le groupe constitué de :

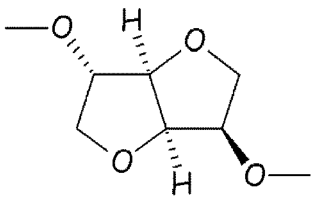
(I),

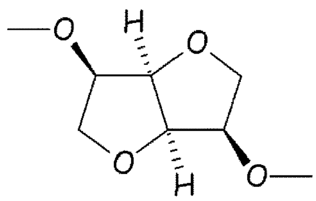
(II),

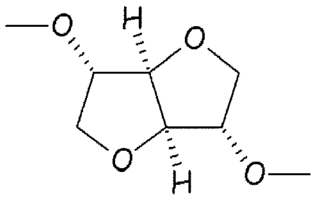
(III),

- chacun des groupes R, identiques ou différents les uns des autres, est sélectionné dans le groupe constitué d'un atome d'halogène et de groupes alkyle, alcényle, alkynyle, aryle, éther, thioéther, acide carboxylique, ester, amide, imide, sulfonate de métal alcalin ou alcalino-terreux, sulfonate d'alkyle, phosphonate de métal alcalin ou alcalino-terreux, phosphonate d'alkyle, amine et ammonium quaternaire ;
- j vaut zéro ou est un nombre entier de 1 à 4,

ledit polymère (b-PAEK) ayant une masse moléculaire moyenne en poids d'au moins 10 000, telle que mesurée par chromatographie par perméation de gel (GPC) en utilisant pour l'étalonnage des étalons en polystyrène.

**2.** Polymère (b-PAEK) selon la revendication 1, dans lequel lesdites unités structurales ($R_b$) sont sélectionnées dans le groupe constitué de :

unités ayant la formule ($R_b$-1) :

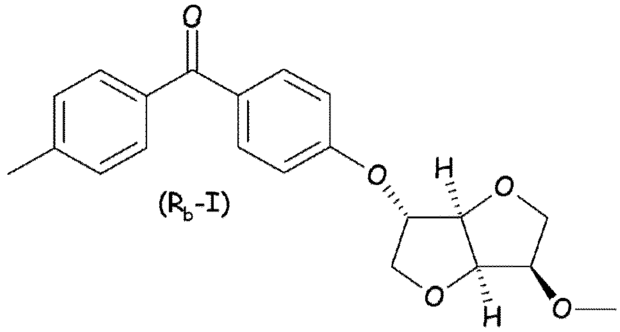

(Rb-I)

unités ayant la formule ($R_b$-2) :

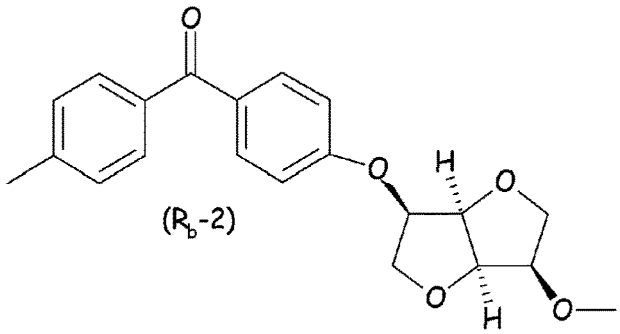

($R_b$-2)

unités ayant la formule ($R_b$-3) :

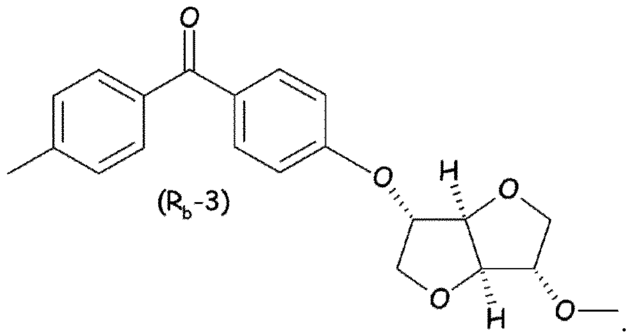

($R_b$-3)

**3.** Polymère (b-PAEK) selon la revendication 1, comprenant en outre des unités structurales différentes des unités (Rb), lesdites unités structurales additionnelles étant dérivées de la polycondensation d'un ou plusieurs diols différents des 1,4:3,6-dianhydrohexitols et/ou de la polycondensation d'un ou plusieurs composés dihaloaryle différents du composé dihalocéto ayant la formule :

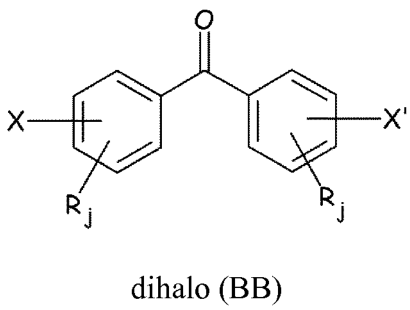

dihalo (BB)

dans laquelle X et X', identiques ou différents l'un de l'autre, sont des halogènes, et R et j ont la signification énoncée dans la revendication 1.

**4.** Polymère (b-PAEK) selon la revendication 3, dans lequel lesdites unités structurales additionnelles sont des unités structurales ($R_a$) comprenant un groupe Ar-C(O)-Ar', Ar et Ar', identiques ou différents l'un de l'autre, étant des groupes aromatiques, lesdites unités structurales ($R_a$) étant généralement sélectionnées dans le groupe constitué des formules (J-A) à (J-O) ci-dessous :

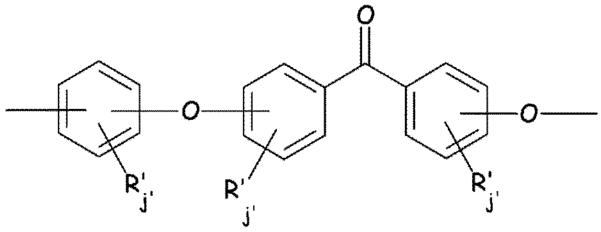

(J-A)

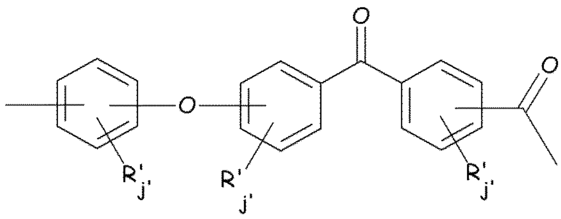

(J-B)

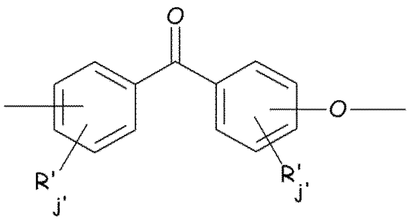

(J-C)

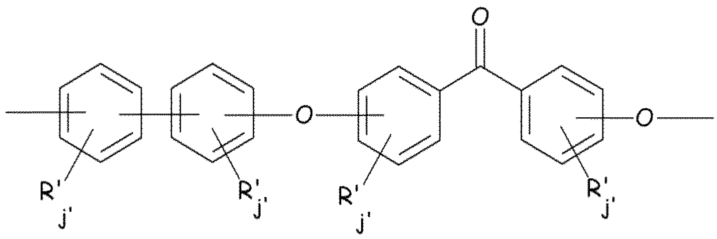

(J-D)

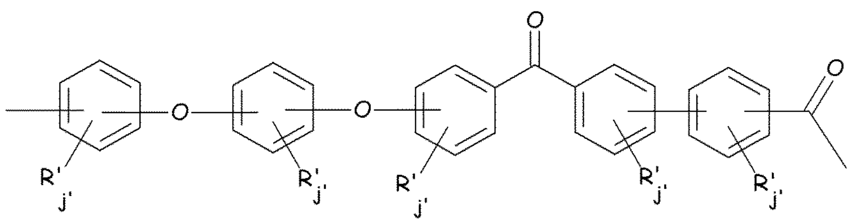

(J-E)

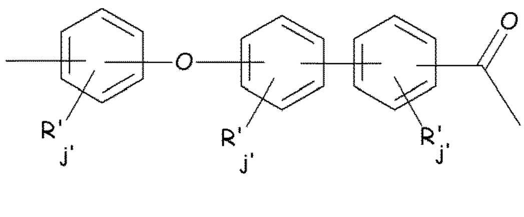

(J-F)

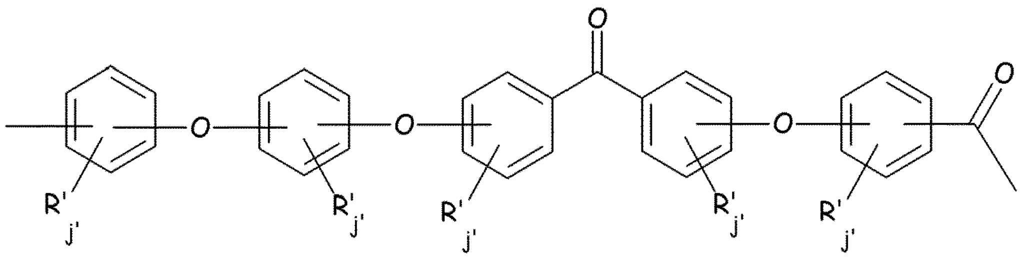

(J-G)

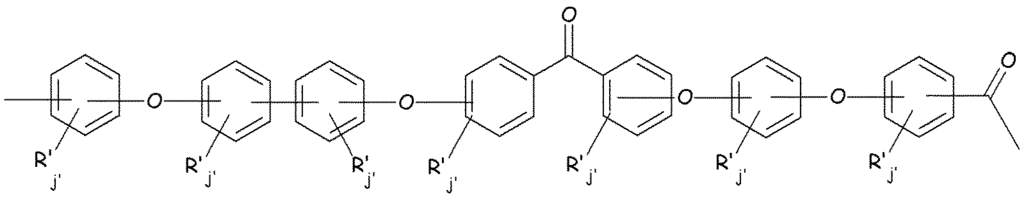

(J-H)

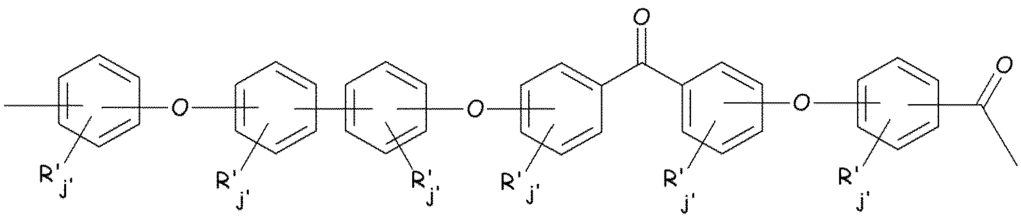

(J-I)

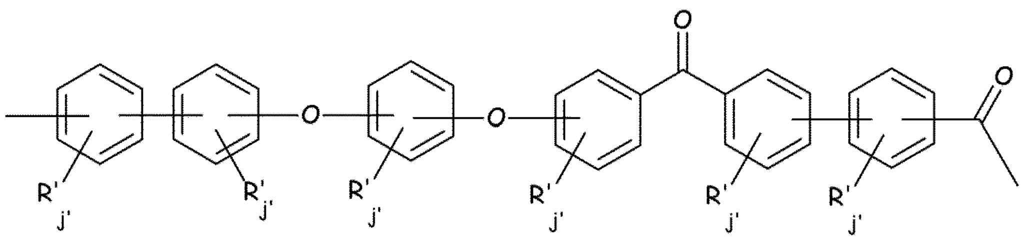

(J-J)

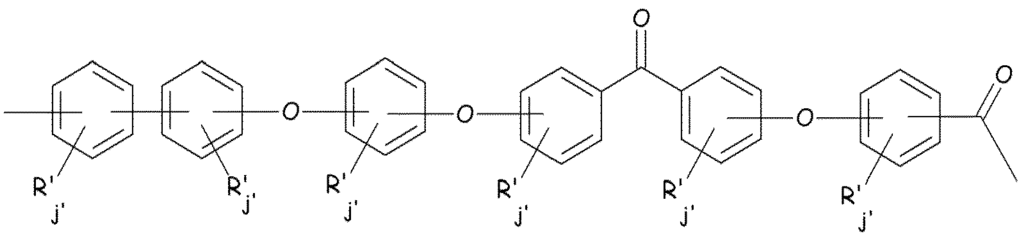

(J-K)

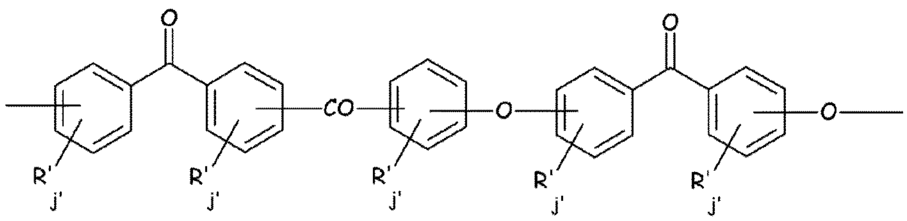

(J-L)

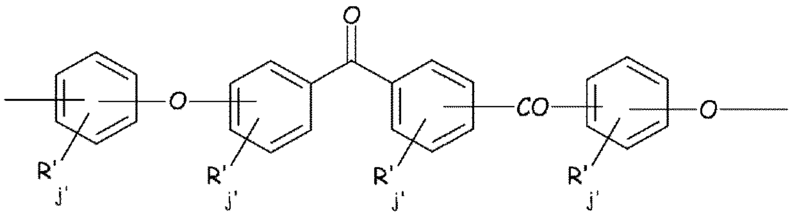

(J-M)

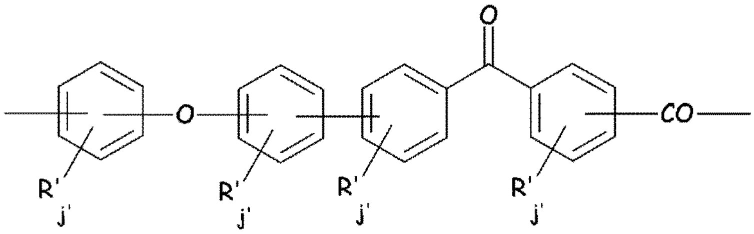

(J-N)

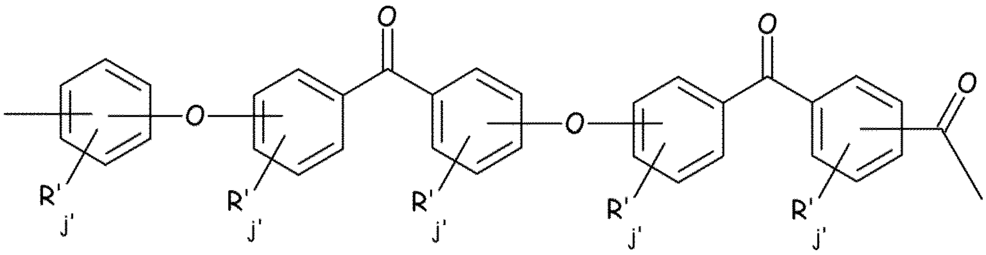

(J-O)

dans lesquelles :

- chacun des groupes R', identiques ou différents les uns des autres, est sélectionné dans le groupe constitué d'un atome d'halogène et de groupes alkyle, alcényle, alkynyle, aryle, éther, thioéther, acide carboxylique, ester, amide, imide, sulfonate de métal alcalin ou alcalino-terreux, sulfonate d'alkyle, phosphonate de métal alcalin ou alcalino-terreux, phosphonate d'alkyle, amine et ammonium quaternaire ;
- j' vaut zéro ou est un nombre entier de 0 à 4.

**5.** Polymère (b-PAEK) selon la revendication 3, dans lequel lesdites unités structurales additionnelles sont des unités structurales ($R_c$) comprenant un groupe Ar-$SO_2$-Ar', Ar et Ar', identiques ou différents l'un de l'autre, étant des groupes aromatiques, lesdites unités structurales ($R_c$) étant généralement selon l'une ou l'autre des formules :

(S1) : $-Ar^1-(T'-Ar^2)_n-O-Ar^3-SO_2-[Ar^4-(T-Ar^2)_n-SO_2]_m-Ar^5-O-$

(S2) : $-E'-O-Ar^3-SO_2-(Ar^4-SO_2)_m-Ar^5-O-$

dans lesquelles :

- $Ar^1$, $Ar^2$, $Ar^3$, $Ar^4$ et $Ar^5$, identiques ou différents les uns des autres et à chaque occurrence, sont indépendamment un groupe aromatique mononucléaire ou polynucléaire ;
- T et T', identiques ou différents l'un de l'autre et à chaque occurrence, sont indépendamment une liaison ou un groupe divalent comprenant optionnellement un ou plus d'un hétéroatome ; T' est préférablement sélectionné dans le groupe constitué d'une liaison, de groupes $-CH_2-$, -C(O)-, $-C(CH_3)_2-$, $-C(CF_3)_2-$, $-C(=CCl_2)-$, $-C(CH_3)(CH_2CH_2COOH)-$, $-SO_2-$, et d'un groupe ayant la formule :

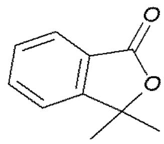,

et T est préférablement sélectionné dans le groupe constitué d'une liaison, de groupes $-CH_2-$, -C(O)-, $-C(CH_3)_2-$, $-C(CF_3)_2-$, $-C(=CCl_2)-$, $-C(CH_3)(CH_2CH_2COOH)-$, et d'un groupe ayant la formule :

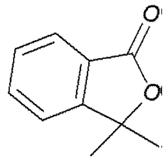,

et

- n et m, identiques ou différents l'un de l'autre, sont indépendamment zéro ou un nombre entier de 1 à 5 ;
- E' est un groupe sélectionné dans le groupe constitué des formules (E'I), (E'-II) et (E'III) :

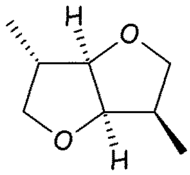 (E'-I), 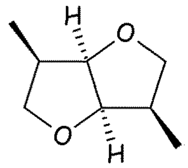 (E'-II), 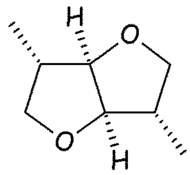 (E'-III).

6. Procédé de fabrication de la polyarylène éther cétone [polymère (b-PAEK)] selon l'une quelconque des revendications précédentes, ledit procédé comprenant la réaction dans un mélange de solvants comprenant un solvant aprotique polaire :

- d'au moins un 1,4:3,6-dianhydrohexitol [diol (AA)] sélectionné dans le groupe constitué de l'isosorbide (1), de l'isomannide (2) et de l'isoidide (3) :

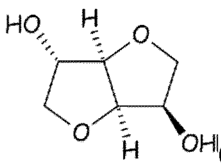 (1) 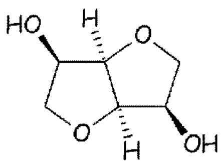 (2) 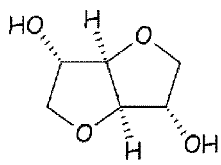 (3)

- d'au moins un composé dihalobenzoïde [composé dihalo (BB)] ayant la formule :

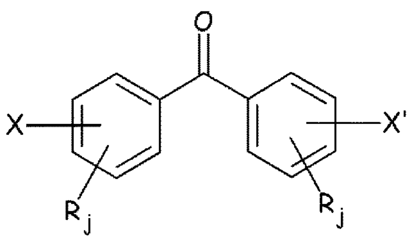

dihalo (BB)

dans laquelle :

- chacun des groupes R, identiques ou différents les uns des autres, est sélectionné dans le groupe constitué d'un atome d'halogène et de groupes alkyle, alcényle, alkynyle, aryle, éther, thioéther, acide carboxylique,

ester, amide, imide, sulfonate de métal alcalin ou alcalino-terreux, sulfonate d'alkyle, phosphonate de métal alcalin ou alcalino-terreux, phosphonate d'alkyle, amine et ammonium quaternaire ;

- j vaut zéro ou est un nombre entier de 1 à 4 ;
- X et X', identiques ou différents l'un de l'autre, sont indépendamment un atome d'halogène, préférablement Cl ou F, plus préférablement F ;

ledit diol (AA) et ledit composé dihalo (BB) réagissant dans une quantité sensiblement équimoléculaire, en présence d'un carbonate de métal alcalin.

**7.** Procédé selon la revendication 6, ledit procédé comprenant en outre la réaction dans ledit mélange de solvants d'au moins l'un de :

- un composé dihydroxyle [diol (A'A')] différent du diol (AA), tel qu'énoncé ci-dessus ;
- un composé dihaloaryle [composé dihalo (B'B')] différent du composé dihalo (BB), tel qu'énoncé ci-dessus ; et
- un composé hydroxyle-halo [hydro-halo (A'B')],

le procédé étant destiné à la fabrication d'un polymère (b-PAEK) comprenant des unités structurales différentes de ($R_b$), et la quantité totale de groupes halo et de groupes hydroxyle étant sensiblement équimoléculaire.

**8.** Procédé selon la revendication 7, ledit procédé comprenant en outre la réaction dans ledit mélange de solvants d'au moins un composé dihaloaryle [composé dihalo (B'B')] différent du composé dihalo (BB) sélectionné dans le groupe constitué de composés ayant la formule (S) :

$$X\text{-}Ar^{3}\text{-}SO_2\text{-}[Ar^{4}\text{-}(T\text{-}Ar^{2})_n\text{-}SO_2]_m\text{-}Ar^{5}\text{-}X \qquad \text{formula (S)}$$

dans laquelle :

- n et m, identiques ou différents l'un de l'autre, sont indépendamment zéro ou un nombre entier de 1 à 5 ;
- X est un atome d'halogène sélectionné parmi F, Cl, Br, I ;
- chacun des groupes $Ar^2$, $Ar^3$, $Ar^4$, $Ar^5$, identiques ou différents les uns des autres et à chaque occurrence, est une fraction aromatique ayant la formule :

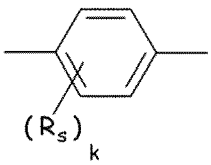

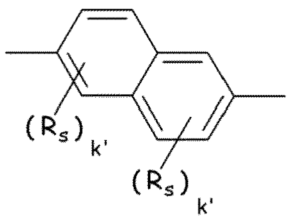

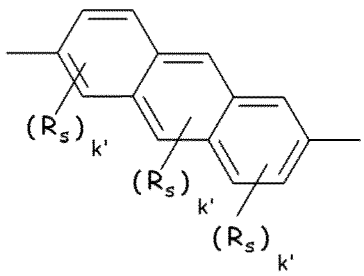

dans laquelle :

- chaque groupe $R_s$ est sélectionné indépendamment dans le groupe constitué d'un atome d'halogène et de groupes alkyle, alcényle, alkynyle, aryle, éther, thioéther, acide carboxylique, ester, amide, imide, sulfonate de métal alcalin ou alcalino-terreux, sulfonate d'alkyle, phosphonate de métal alcalin ou alcalino-terreux, phosphonate d'alkyle, amine et ammonium quaternaire ; et
- k vaut zéro ou est un nombre entier de 1 à 4 ; k' vaut zéro ou est un nombre entier de 1 à 3 ;
- T est une liaison ou un groupe divalent comprenant optionnellement un ou plus d'un hétéroatome ; T est préférablement sélectionné dans le groupe constitué d'une liaison, de groupes $-CH_2-$, -C(O)-, $-C(CH_3)_2-$, $-C(CF_3)_2-$, $-C(=CCl_2)-$, $-C(CH_3)(CH_2CH_2COOH)-$, et d'un groupe ayant la formule :

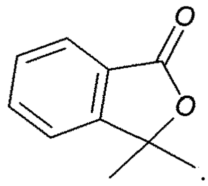

9. Procédé selon la revendication 7, ledit procédé comprenant en outre la réaction dans ledit mélange de solvants d'au moins un composé dihydroxyle [diol (A'A')] différent du diol (AA) sélectionné dans le groupe constitué de composés ayant la formule (O) :

$HO\text{-}Ar^1\text{-}(T'\text{-}Ar^2)_n\text{-}OH$ formule (O)

dans laquelle :

- n vaut zéro ou est un nombre entier de 1 à 5 ;
- chacun des groupes $Ar^1$ et $Ar^2$, identiques ou différents l'un de l'autre et à chaque occurrence, est une fraction aromatique ayant la formule :

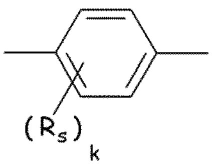

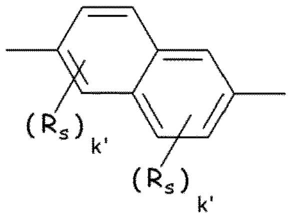

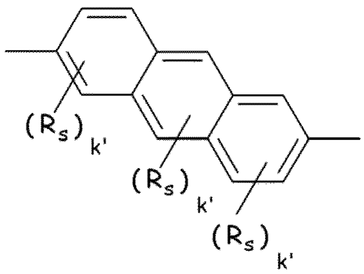

dans laquelle :

- chaque groupe $R_s$ est sélectionné indépendamment dans le groupe constitué d'un atome d'halogène et de groupes alkyle, alcényle, alkynyle, aryle, éther, thioéther, acide carboxylique, ester, amide, imide, sulfonate de métal alcalin ou alcalino-terreux, sulfonate d'alkyle, phosphonate de métal alcalin ou alcalino-terreux, phosphonate d'alkyle, amine et ammonium quaternaire ; et
- k vaut zéro ou est un nombre entier de 1 à 4 ; k' vaut zéro ou est un nombre entier de 1 à 3 ;
- T' est une liaison ou un groupe divalent comprenant optionnellement un ou plus d'un hétéroatome ; T' est préférablement sélectionné dans le groupe constitué d'une liaison, de groupes $-SO_2-$, $-CH_2-$, $-C(O)-$, $-C(CH_3)_2-$, $-C(CF_3)_2-$, $-C(=CCl_2)-$, $-C(CH_3)(CH_2CH_2COOH)-$, et d'un groupe ayant la formule :

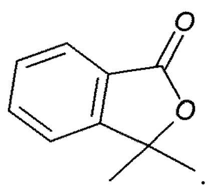

10. Utilisation de la polyarylène éther cétone [polymère (b-PAEK)] selon l'une quelconque des revendications 1 à 5 pour la fabrication de membranes, de films et de feuilles, et de pièces moulées tridimensionnelles.

11. Articles formés fabriqués à partir du polymère (b-PAEK) selon l'une quelconque des revendications 1 à 5, sélectionnés dans le groupe constitué de films transformés par fusion, de films transformés en solution, de mono filaments et de fibres transformés par fusion, de monofilaments transformés en solution, de fibres creuses et de fibres pleines, et d'objets moulés par injection et par compression.

12. Articles formés fabriqués à partir du polymère (b-PAEK) selon l'une quelconque des revendications 1 à 5, sélectionnés parmi des membranes de biotraitement et de filtration médicale, y compris les membranes d'hémodialyse, des membranes pour la transformation d'aliments et de boissons, des membranes pour le traitement des eaux

usées et des membranes pour les séparations dans des procédés industriels utilisant des milieux aqueux.

**13.** Articles formés fabriqués à partir du polymère (b-PAEK) selon l'une quelconque des revendications 1 à 5, sélectionnés parmi des films et des feuilles.

**14.** Procédé de revêtement de substrats comprenant l'utilisation du polymère (b-PAEK) selon l'une quelconque des revendications 1 à 5, ledit procédé comprenant l'utilisation d'une composition liquide comprenant ledit polymère (b-PAEK) et d'au moins un milieu liquide, dans lequel ladite solution de polymère (b-PAEK) est au moins partiellement dissoute dans un milieu liquide.

**15.** Procédé selon la revendication 13 ou 14, comprenant le fait de soumettre la couche comprenant le polymère (b-PAEK) à un traitement thermique à une température d'au moins 150°C, préférablement d'au moins 200°C, plus préférablement de 200 à 350°C.

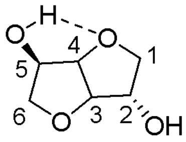

1

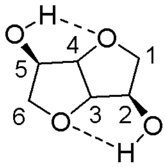

2

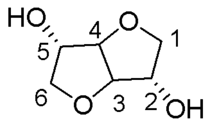

3

Fig. 1

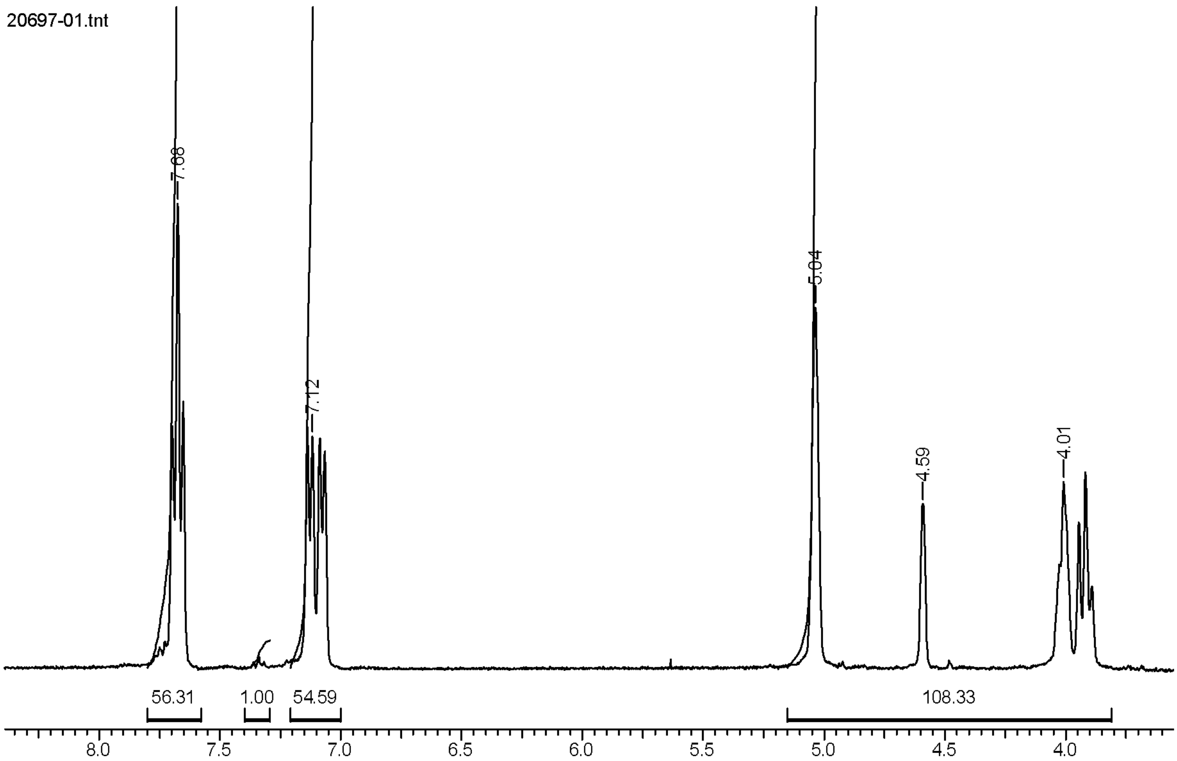


Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61523087 A
- EP 11188634 A
- US 6608167 B
- WO 0200763 A
- WO 0200271 A


### Non-patent literature cited in the description


- **CHATTI et al.** *High Performance Polymers,* 2009, vol. 21, 105-118